# EUROPEAN PATENT SPECIFICATION

(11) **EP 4 261 570 B1**
(45) Date of publication and mention of the grant of the patent: **26.11.2025**
(21) Application number: 20967241.9
(22) Date of filing: 28.12.2020
(51) Int. Cl.: G01S 13/931, G01S 7/02

(54) **DETECTION METHOD, DETECTION DEVICE, DETECTION SYSTEM, AND RADAR**
DETEKTIONSVERFAHREN, DETEKTIONSVORRICHTUNG, DETEKTIONSSYSTEM UND RADAR
PROCÉDÉ, DISPOSITIF ET SYSTÈME DE DÉTECTION ET RADAR

(43) Date of publication of application: 18.10.2023
(73) Proprietor: Shenzhen Yinwang Intelligent Technologies Co., Ltd., Shenzhen, Guangdong 518129 (CN)
(72) Inventor: SONG, Sida, Shenzhen, Guangdong 518129 (CN); MA, Sha, Shenzhen, Guangdong 518129 (CN)
(74) Representative: Pfenning, Meinig & Partner mbB
(86) International application number: PCT/CN2020/139885
(87) International publication number: WO 2022/140889

(56) References cited:
- WO-A1-2020/126050
- CN-A- 102 590 807
- CN-A- 102 608 581
- CN-A- 106 199 523
- CN-A- 111 190 170
- DE-A1- 102017 216 435
- US-A1- 2016 061 935
- US-A1- 2019 331 763
- US-A1- 2019 391 247

## Description

### TECHNICAL FIELD

This disclosure, applied to the fusion perception field of self driving or intelligent driving, relates to radar technologies, and the invention in particular relates to a detection method, and a detection apparatus.

### BACKGROUND

With the development of society, intelligent vehicles are gradually entering daily lives of people. Sensors play a very important role in assisted driving and self driving of intelligent vehicles. Various sensors such as a millimeter-wave radar, a laser radar, an ultrasonic radar, and a camera installed on vehicles can sense a surrounding environment, identify and track a moving object, and identify a static scenario (such as a lane line or a sign) in a vehicle driving process. In short, a sensor can perceive a possible danger in advance, help a driver in a timely manner, and take a necessary preventive measure, thereby effectively improving safety and comfort of vehicle driving.

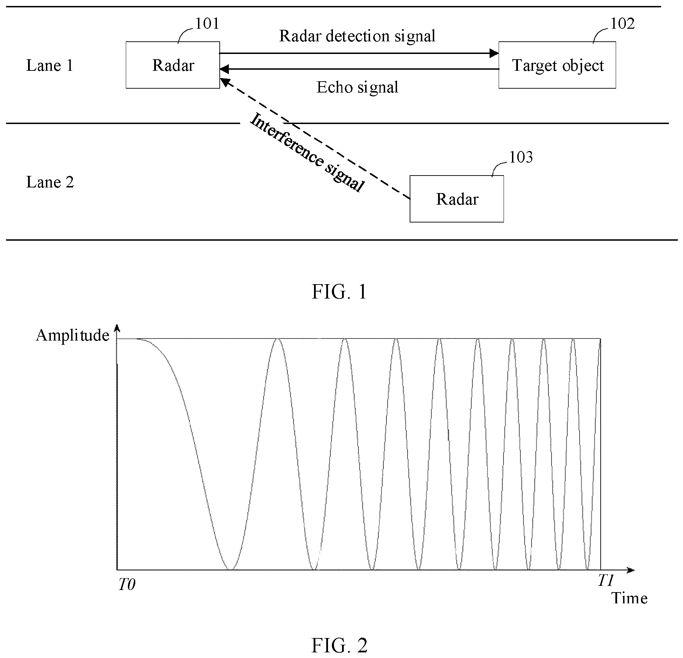

A vehicle-mounted radar is an important constituent part of a vehicle-mounted sensor. However, as a vehicle-mounted radar penetration rate increases, mutual interference between vehicle-mounted radars is increasingly severe, which reduces radar detection efficiency, and increases a false alarm probability thereof. This causes considerable impact on safety or comfort. As shown in FIG. 1, a radar 101 may transmit a sounding signal outwards, and receive an echo signal reflected by a target object 102. However, because there is also a radar 103 in a field of view of the radar 101, in a process in which the radar 101 receives the echo signal reflected by the target object 102, a receive antenna of the radar 101 may also receive a transmit signal of the radar 103. A receiving module of the radar 101 may perform a same signal processing operation on received signals (including the echo signal reflected by the target object 102 and the transmit signal of the radar 103). As a result, the transmit signal of the radar 103 interferes with processing of the original echo signal. For a vehicle, if an interference signal causes a false alarm, a self-driving vehicle (or an intelligent assisted driving vehicle) decelerates or abruptly brakes when there is no object ahead. This reduces driving comfort. If an interference signal causes missed detection, when there is an object ahead, a self-driving vehicle (or an intelligent assisted driving vehicle) mistakenly considers that there is no object ahead, and does not decelerate or brake. This causes a traffic accident, and reduces vehicle driving safety.

A radar can avoid signal interference by using an interference listening (listen before talk, LBT) technology. Specifically, a radar may listen for an interference signal by using a receiving module, avoid a time-frequency resource used by the interference signal, and select an appropriate resource for target detection. However, the interference listening technology requires sufficient time for listening, to accurately determine a resource occupation status. In some scenarios, such as a crossroads and a T-junction, due to a non-line-of-sight (not line of sight, NLOS) case caused by spatial distribution or physical blocking (blocking by a building or another object), vehicles in different directions can sense a signal of each other only after fields of view (field of view, FOV) overlap to a comparatively large extent when the vehicles are comparatively close to each other or after the vehicles turn, that is, a comparatively small amount of time is left for listening. Consequently, a listening effect is poor, which affects a final interference avoidance effect.

Therefore, how to improve quality of interference listening between vehicle-mounted radars is a technical problem being studied by a person skilled in the art.

US 2019/391247 A1 relates to methods, systems, and devices for radar signaling. The devices select radar parameters to support coexistence for multiple radar sources in the system. A user equipment detects interference from at least one interference source to reduce mutual interference between radar waveforms in a system and select waveform parameters for transmission of a radar waveform based on the detected interference. A user equipment determines slopes, frequency offsets, codewords, or a combination thereof used by nearby devices in the system and may select waveform parameters that result in low mutual interference with the determined slopes, frequency offsets, codewords, or combination thereof. Further, the user equipment transmits the radar waveform according to the selected waveform parameters.

US 2016/061935 A1 relates to a method that includes a vehicle receiving data from an external computing device indicative of at least one other vehicle in an environment of the vehicle. The vehicle includes a sensor configured to detect the environment of the vehicle. The at least one another vehicle includes at least one sensor. Further, the method also includes determining a likelihood of interference between the at least one sensor of the at least one other vehicle and the sensor of the vehicle. Further, the method also includes initiating an adjustment of the sensor to reduce the likelihood of interference between the sensor of the vehicle and the at least one sensor of the at least one other vehicle responsive to the determination.

US 2019/331763 A1 relates to a method by a computing system of a vehicle, providing one or more instructions to cause a first radar antenna to broadcast a modulated radar chirp signal. The modulated radar chirp signal includes data. The method includes receiving a first return signal that corresponds to the modulated radar chirp signal reflected off of an object in an environment. The method includes calculating a location for the object using the first return signal. Further, the method includes receiving, from a second radar antenna, a second return signal indicating that the modulated radar chirp signal was received by the second radar antenna.

### SUMMARY

The object of the present invention is to provide a detection method and a detection apparatus, so as to improve quality of interference listening between vehicle-mounted radars. This object is solved by the attached independent claims, and further embodiments and improvements of the invention are listed in the attached dependent claims.

According to a first aspect of the invention, the invention discloses a detection method, including:
listening for at least one signal coming from at least one direction, where the at least one signal includes a first signal corresponding to a first direction; and
transmitting a second signal toward a second direction, where the second signal is used to indicate a predicted interference time-frequency range, where
time-frequency ranges of the first signal and the second signal meet at least one of the following:
   a frequency domain range of the first signal is a subset of a frequency domain range of the second signal; or
   a time domain range of the first signal is a subset of a time domain range of the second signal.

In this not-claimed embodiment of this application, the signal in the one or more directions is listened for, and the second signal is transmitted toward the second direction, where the second signal is used to indicate, to the second direction, a time domain range or frequency domain range in which interference may exist. Therefore, a second detection apparatus (for example, a vehicle-mounted radar) located in the second direction can obtain, by listening for the second signal, a time-frequency range in which interference exists. This improves listening quality of the second detection apparatus. Further, the second detection apparatus may adjust a time domain range (or a frequency domain range) of a detection signal of the second detection apparatus, to avoid, as far as possible, a time domain range (or a frequency domain range) in which interference exists, thereby avoiding interference from another signal to the detection signal of the second detection apparatus. This improves accuracy of target detection by the second detection apparatus.

In a not-claimed implementation, the embodiment of this application may be applied to an intersection radar, and may be considered as forwarding, by the intersection radar in a form of the second signal, a predicted time domain range and/or frequency domain range in which interference exists in one or more road directions (for example, referred to as a first road direction), so that the second detection apparatus (for example, the vehicle-mounted radar) located in another road direction (for example, a second road direction) obtains an interference time-frequency range of a non-line-of-sight area, to avoid cases in which interference suddenly occurs and a quantity of listening opportunities is comparatively small during turning at an intersection. When the second detection apparatus is the vehicle-mounted radar or a vehicle-mounted detection apparatus, accuracy of vehicle target detection can be improved, thereby improving driving safety.

With reference to the first aspect, in a possible implementation of the first aspect, the method further includes:
obtaining time domain information and frequency domain information of the at least one signal, where the time domain information includes at least one of a period, an offset, and duration.

In a not-claimed implementation, the period is a detection period of the signal, the offset is an offset between a detection start time of the at least one signal and a period start time, and the duration is a duration time segment of the signal. For example, 50 ms is one detection period, and an initial time of synchronization is 0. In this case, 0-50 ms is one detection period. In addition, a detection time of the radar starts from the 10^{th} ms and lasts for 5 ms. In this case, the period of the at least one signal is 50 ms, the offset is 10 ms, and the duration is 5 ms.

With reference to the first aspect, in a possible implementation of the first aspect, the first direction is the first road direction of the intersection, the second direction is the second road direction of the intersection, a plurality of lanes in the second road direction include a first lane, and the first lane is a lane that allows driving toward the first road direction.

In this not-claimed embodiment of this application, different radar signals may be transmitted for different lanes based on requirements. Further, terminals on different lanes may also receive (listen for) directionally transmitted interference signals, so as to avoid interference from an irrelevant signal.

With reference to the first aspect, in a possible not-claimed implementation of the first aspect, the second detection apparatus exists in the second direction, and before the transmitting a second signal toward a second direction, the method further includes:
determining, based on driving intention information of the second detection apparatus, that the second detection apparatus intends to turn toward the first direction.

With reference to the first aspect, in another possible implementation of the first aspect, the at least one signal further includes a third signal corresponding to a third direction, and time-frequency ranges of the third signal and the second signal further meet at least one of the following:
a frequency domain range of the third signal is a subset of the frequency domain range of the second signal; or
a time domain range of the third signal is a subset of the time domain range of the second signal.

With reference to the first aspect, in another possible implementation of the first aspect, the method further includes:
listening for a fourth signal coming from a fourth direction; and
transmitting a fifth signal toward the second direction, where the fifth signal is used to indicate a predicted interference time-frequency range of the fourth direction, and time-frequency ranges of the fourth signal and the fifth signal meet at least one of the following:
   a frequency domain range of the fourth signal is a subset of a frequency domain range of the fifth signal; or
   a time domain range of the fourth signal is a subset of a time domain range of the fifth signal.

According to the invention, the first signal includes at least one sub-signal, the frequency domain range of the second signal includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

It can be understood that a signal with higher signal strength may cause more severe interference. Therefore, the first detection apparatus obtains, based on the sub-signal whose signal strength ranks in the top N, the predicted interference time-frequency range from the signal obtained through listening in the first direction, and indicates the predicted interference time-frequency range by using the second signal, so as to more accurately indicate the range in which interference may exist. N may be preconfigured or predefined by a first node.

In a possible case, interference may be caused to a real echo signal only when signal strength exceeds the first threshold. Therefore, the first detection apparatus may predefine the first threshold or preconfigure the first threshold, obtain the predicted interference time-frequency range based on the N sub-signals whose signal strength exceeds the first threshold in the signal in the first direction, and indicate the predicted interference time-frequency range by using the second signal, so as to more effectively indicate the range in which interference exists.

In another possible case, if there are a comparatively large quantity of sub-signals whose signal strength exceeds the first threshold, the first detection apparatus may obtain the predicted interference time-frequency range based on the sub-signal whose signal strength exceeds the first threshold and ranks in the top N, and indicate the predicted interference time-frequency range by using the second signal, so as to more effectively indicate the range in which interference exists.

With reference to the first aspect, in another possible implementation of the first aspect, the second signal is transmitted in a form of a detection frame, the detection frame includes a detection time and an idle time, the detection time of the detection frame is used to transmit a first detection signal for target detection, and the transmitting a second signal toward a second direction includes:
sending the second signal in the detection time of the detection frame, where the second signal belongs to the first detection signal; or
sending the first detection signal in the detection time of the detection frame, and sending the second signal in the idle time of the detection frame; or
sending the first detection signal in a detection time of a first detection frame, and sending the second signal in a detection time of a second detection frame, where the detection frame includes the first detection frame and the second detection frame.

In the first case, the second signal is a detection signal, and therefore, an echo signal corresponding to the second signal may be further received, and a detection result in the second direction is obtained through processing. In addition, the second signal indicates, to the second direction, the time-frequency range in which interference may exist, so that a terminal, a detection apparatus, or the like located in the second direction avoids, as far as possible based on the second signal, the time domain range and/or frequency domain range in which interference exists.

In the second not-claimed case, a target detection task may be executed based on the original detection time, whereas the second signal is transmitted in the idle time to indicate, to the second road direction, the time-frequency range and/or time domain range in which interference exists.

In the third not-claimed case, some of detection frames may be selected from the detection frames to transmit the second signal, so as to indicate, to the second direction, the time domain and/or frequency domain range in which interference exists. It can be understood that the first detection frame and the second detection frame may be alternately arranged, or may be arranged in another form (for example, the second detection frame is subsequent to two first detection frames).

With reference to the first aspect, in another possible implementation of the first aspect, the second signal is transmitted in a form of a detection frame, the detection frame includes a detection time and an idle time, the detection time of the detection frame is used to transmit a first detection signal for target detection, and the listening for at least one signal coming from at least one direction includes:
listening, in the idle time of the detection frame, for the at least one signal coming from the at least one direction.

According to a second not-claimed aspect, an embodiment of this application discloses a detection method, including:
receiving a second signal, where the second signal is used to indicate a predicted interference time-frequency range; and
transmitting a second detection signal for target detection, where a time-frequency range of the second detection signal and a time-frequency range of the second signal meet at least one of the following:
   a frequency domain range of the second detection signal is different from a frequency domain range of the second signal; or
   a time domain range of the second detection signal is different from a time domain range of the second signal.

With reference to the second not-claimed aspect, in a possible implementation of the second aspect, the second signal comes from an intersection radar at an intersection, and the second signal is used to indicate a predicted interference time-frequency range in a first road direction of the intersection; and
the method is applied to a mobile terminal, the mobile terminal is located at a first lane in a second road direction, and the first lane is a lane that allows driving toward the first road direction.

According to a third not-claimed aspect, an embodiment of this application discloses a detection method, including:
listening for at least one signal coming from at least one direction, where the at least one signal includes a first signal corresponding to a first direction; and
indicating a predicted interference time-frequency range to a communications module, where the interference time-frequency range corresponds to a first frequency domain range and a first time domain range, and the predicted interference time-frequency range and a time-frequency range of the first signal meet at least one of the following:
   a frequency domain range of the first signal is a subset of the first frequency domain range; or
   a time domain range of the first signal is a subset of the first time domain range.

In this not-claimed embodiment of this application, the predicted interference time-frequency range may be obtained by listening for the signal in the one or more directions, and the interference time-frequency range may be indicated to another detection apparatus, for example, a second detection apparatus, by using the communications module. In this way, the second detection apparatus (for example, a vehicle-mounted radar) can obtain, by using indication information, the time-frequency range in which interference may exist. Further, the second detection apparatus may adjust a time domain range (or a frequency domain range) of a detection signal of the second detection apparatus, to avoid the time-frequency range in which interference exists, thereby avoiding interference from another signal to the detection signal of the second detection apparatus. This improves accuracy of target detection by the second detection apparatus.

This not-claimed embodiment of this application may be applied to an intersection radar, and may be considered as forwarding, by the intersection radar, a predicted time domain range and/or frequency domain range in which interference exists in one or more road directions (for example, referred to as a first road direction), so that the second detection apparatus (for example, the vehicle-mounted radar) located in another road direction (for example, a second road direction) obtains an interference time-frequency range of a non-line-of-sight area, to avoid cases in which interference suddenly occurs and a quantity of listening opportunities is comparatively small during turning at an intersection. When the second detection apparatus is the vehicle-mounted radar or a vehicle-mounted detection apparatus, accuracy of vehicle target detection can be improved, thereby improving driving safety.

With reference to the third aspect, in a possible implementation of the third aspect, the method further includes:
obtaining time domain information and frequency domain information of the at least one signal, where the time domain information includes at least one of a period, an offset, and duration.

With reference to the third not-claimed aspect, in another possible implementation of the third aspect, the first signal includes at least one sub-signal, the frequency domain range of the first signal includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

With reference to the third aspect, in another possible implementation of the third aspect, the first direction is the first road direction of the intersection, and the communications module is configured to indicate the predicted interference time-frequency range to a mobile terminal located in the second road direction of the intersection.

According to a fourth not-claimed aspect, an embodiment of this application discloses a detection method, including:
receiving indication information sent by a first detection apparatus, where the indication information indicates a predicted interference time-frequency range, and the interference time-frequency range corresponds to a first frequency domain range and a first time domain range; and
transmitting a second detection signal, where a time-frequency range of the first signal and the interference time-frequency range meet at least one of the following:
   a frequency domain range of the second detection signal is different from the first frequency domain range; or
   a time domain range of the second detection signal is different from the first time domain range.

With reference to the fourth not-claimed aspect, in a possible implementation of the fourth aspect, the first detection apparatus is an intersection radar at an intersection, and the interference time-frequency range is specifically used to indicate an interference time-frequency range in a first road direction of the intersection; and
the method is applied to a mobile terminal, the mobile terminal is located at a first lane in a second road direction, and the first lane is a lane that allows driving toward the first road direction.

According to a fifth aspect of the invention, the invention discloses a detection apparatus, including:
a listening unit, configured to listen for at least one signal coming from at least one direction, where the at least one signal includes a first signal corresponding to a first direction; and
a signal transmitting unit, configured to transmit a second signal toward a second direction, where the second signal is used to indicate a predicted interference time-frequency range, where
time-frequency ranges of the first signal and the second signal meet at least one of the following:
   a frequency domain range of the first signal is a subset of a frequency domain range of the second signal; or
   a time domain range of the first signal is a subset of a time domain range of the second signal.

With reference to the fifth aspect, in a possible implementation of the fifth aspect, the apparatus further includes:
a processing unit, configured to obtain time domain information and frequency domain information of the at least one signal, where the time domain information includes at least one of a period, an offset, and duration.

With reference to the fifth aspect, in another possible implementation of the fifth aspect, the first direction is a first road direction of an intersection, the second direction is a second road direction of the intersection, a plurality of lanes in the second road direction include a first lane, and the first lane is a lane that allows driving toward the first road direction.

With reference to the fifth aspect, in another possible but not claimed implementation of the fifth aspect, a second detection apparatus exists in the second direction, and the processing unit is further configured to determine, based on driving intention information of the second detection apparatus, that the second detection apparatus intends to turn toward the first direction.

With reference to the fifth aspect, in another possible implementation of the fifth aspect, the at least one signal further includes a third signal corresponding to a third direction, and time-frequency ranges of the third signal and the second signal further meet at least one of the following:
a frequency domain range of the third signal is a subset of the frequency domain range of the second signal; or
a time domain range of the third signal is a subset of the time domain range of the second signal.

With reference to the fifth aspect, in another possible implementation of the fifth aspect, the listening unit is further configured to listen for a fourth signal coming from a fourth direction; and
the signal transmitting unit is further configured to transmit a fifth signal toward the second direction, where the fifth signal is used to indicate a predicted interference time-frequency range of the fourth direction, and time-frequency ranges of the fourth signal and the fifth signal meet at least one of the following:
a frequency domain range of the fourth signal is a subset of a frequency domain range of the fifth signal; or
a time domain range of the fourth signal is a subset of a time domain range of the fifth signal.

According to the invention, the first signal includes at least one sub-signal, the frequency domain range of the second signal includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

With reference to the fifth aspect, in another possible implementation of the fifth aspect, the second signal is transmitted in a form of a detection frame, the detection frame includes a detection time and an idle time, the detection time of the detection frame is used to transmit a first detection signal for target detection, and the signal transmitting unit is specifically configured to:
send the second signal in the detection time of the detection frame, where the second signal belongs to the first detection signal; or
send the first detection signal in the detection time of the detection frame, and send the second signal in the idle time of the detection frame; or
send the first detection signal in a detection time of a first detection frame, and send the second signal in a detection time of a second detection frame, where the detection frame includes the first detection frame and the second detection frame.

With reference to the fifth not-claimed aspect, in another possible implementation of the fifth aspect, the second signal is transmitted in a form of a detection frame, the detection frame includes a detection time and an idle time, the detection time of the detection frame is used to transmit a first detection signal for target detection, and the listening unit is specifically configured to listen, in the idle time of the detection frame, for the at least one signal coming from the at least one direction.

According to a sixth not-claimed aspect, an embodiment of this application discloses a second detection apparatus, including:
a signal receiving unit, configured to receive a second signal, where the second signal is used to indicate a predicted interference time-frequency range; and
a signal transmitting unit, configured to transmit a second detection signal for target detection, where a time-frequency range of the second detection signal and a time-frequency range of the second signal meet at least one of the following:
   a frequency domain range of the second detection signal is different from a frequency domain range of the second signal; or
   a time domain range of the second detection signal is different from a time domain range of the second signal.

With reference to the sixth not-claimed aspect, in a possible implementation of the sixth aspect, the second signal comes from an intersection radar at an intersection, and the second signal is used to indicate a predicted interference time-frequency range in a first road direction of the intersection; and
the second detection apparatus is located at a first lane in a second road direction, and the first lane is a lane that allows driving toward the first road direction.

According to a seventh not-claimed aspect, an embodiment of this application discloses a first detection apparatus, including:
a listening unit, configured to listen for at least one signal coming from at least one direction, where the at least one signal includes a first signal corresponding to a first direction; and
a communications unit, configured to indicate a predicted interference time-frequency range to a communications module, where the interference time-frequency range corresponds to a first frequency domain range and a first time domain range, and the predicted interference time-frequency range and a time-frequency range of the first signal meet at least one of the following:
   a frequency domain range of the first signal is a subset of the first frequency domain range; or
   a time domain range of the first signal is a subset of the first time domain range.

With reference to the seventh aspect, in a possible implementation of the seventh aspect, the apparatus further includes:
a processing unit, configured to obtain time domain information and frequency domain information of the at least one signal, where the time domain information includes at least one of a period, an offset, and duration.

With reference to the seventh not-claimed aspect, in a possible implementation of the seventh aspect, the first signal includes at least one sub-signal, the interference time-frequency range includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

With reference to the seventh not-claimed aspect, in a possible implementation of the seventh aspect, the first direction is a first road direction of an intersection, and the communications module is configured to indicate the predicted interference time-frequency range to a mobile terminal located in a second road direction of the intersection.

According to an eighth not-claimed aspect, an embodiment of this application discloses a second detection apparatus, including:
a receiving unit, configured to receive indication information sent by a first detection apparatus, where the indication information indicates a predicted interference time-frequency range, and the interference time-frequency range corresponds to a first frequency domain range and a first time domain range; and
a signal transmitting unit, configured to transmit a second detection signal, where a time-frequency range of the first signal and the interference time-frequency range meet at least one of the following:
   a frequency domain range of the second detection signal is different from the first frequency domain range; or
   a time domain range of the second detection signal is different from the first time domain range.

With reference to the eighth not-claimed aspect, in a possible implementation of the eighth aspect, the first detection apparatus is an intersection radar at an intersection, and the interference time-frequency range is specifically used to indicate an interference time-frequency range in a first road direction of the intersection; and
the second detection apparatus is located at a first lane in a second road direction, and the first lane is a lane that allows driving toward the first road direction.

According to a ninth not-claimed aspect, an embodiment of this application further provides a first detection apparatus, including a listening module, a signal transmitting module, and a processor. The processor is configured to invoke one or more computer programs stored in a memory, so that the first detection apparatus implements the method according to any one of the first aspect or the possible implementations of the first aspect.

In a possible not-claimed implementation of the ninth aspect, the processor executes the one or more programs stored in the memory, so that the first detection apparatus implements the following operations:
listening, by using the listening module, for at least one signal coming from at least one direction, where the at least one signal includes a first signal corresponding to a first direction; and
transmitting a second signal toward a second direction by using the signal transmitting module, where the second signal is used to indicate a predicted interference time-frequency range, where
time-frequency ranges of the first signal and the second signal meet at least one of the following:
   a frequency domain range of the first signal is a subset of a frequency domain range of the second signal; or
   a time domain range of the first signal is a subset of a time domain range of the second signal.

With reference to the ninth not-claimed aspect, in another possible implementation of the ninth aspect, the first direction is a first road direction of an intersection, the second direction is a second road direction of the intersection, a plurality of lanes in the second road direction include a first lane, and the first lane is a lane that allows driving toward the first road direction.

With reference to the ninth not-claimed aspect, in another possible implementation of the ninth aspect, a second detection apparatus exists in the second direction, and the processor is further configured to determine, based on driving intention information of the second detection apparatus, that the second detection apparatus intends to turn toward the first direction.

With reference to the ninth not-claimed aspect, in another possible implementation of the ninth aspect, the at least one signal further includes a third signal corresponding to a third direction, and time-frequency ranges of the third signal and the second signal further meet at least one of the following:
a frequency domain range of the third signal is a subset of the frequency domain range of the second signal; or
a time domain range of the third signal is a subset of the time domain range of the second signal.

With reference to the ninth not-claimed aspect, in another possible implementation of the ninth aspect, the processor is further configured to:
listen, by using the listening module, for a fourth signal coming from a fourth direction; and
transmit a fifth signal toward the second direction by using the signal transmitting module, where the fifth signal is used to indicate a predicted interference time-frequency range of the fourth direction, and time-frequency ranges of the fourth signal and the fifth signal meet at least one of the following:
   a frequency domain range of the fourth signal is a subset of a frequency domain range of the fifth signal; or
   a time domain range of the fourth signal is a subset of a time domain range of the fifth signal.

With reference to the ninth aspect, in another possible implementation of the ninth aspect, the first signal includes at least one sub-signal, the frequency domain range of the second signal includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

With reference to the ninth not-claimed aspect, in another possible implementation of the ninth aspect, the second signal is transmitted in a form of a detection frame, the detection frame includes a detection time and an idle time, the detection time of the detection frame is used to transmit a first detection signal for target detection, and the processor is specifically configured to:
send the second signal in the detection time of the detection frame by using the signal transmitting module, where the second signal belongs to the first detection signal; or
send the first detection signal in the detection time of the detection frame by using the signal transmitting module, and send the second signal in the idle time of the detection frame by using the signal transmitting module; or
send the first detection signal in a detection time of a first detection frame by using the signal transmitting module, and send the second signal in a detection time of a second detection frame by using the signal transmitting module, where the detection frame includes the first detection frame and the second detection frame.

With reference to the ninth not-claimed aspect, in another possible implementation of the ninth aspect, the second signal is transmitted in a form of a detection frame, the detection frame includes a detection time and an idle time, the detection time of the detection frame is used to transmit a first detection signal for target detection, and the processor is specifically configured to listen, by using the listening module in the idle time of the detection frame, for the at least one signal coming from the at least one direction.

According to a tenth not-claimed aspect, an embodiment of this application further provides a first detection apparatus, including a signal receiving module, a signal transmitting module, and a processor. The processor is configured to invoke one or more computer programs stored in a memory, so that the first detection apparatus implements the method according to the second aspect or the possible implementation of the second aspect.

In a possible implementation of the tenth not-claimed aspect, the processor is configured to execute the one or more computer programs stored in the memory, to perform the following operations:
receiving a second signal by using the signal receiving module, where the second signal is used to indicate a predicted interference time-frequency range; and
transmitting, by using the signal transmitting module, a second detection signal for target detection, where a time-frequency range of the second detection signal and a time-frequency range of the second signal meet at least one of the following:
   a frequency domain range of the second detection signal is different from a frequency domain range of the second signal; or
   a time domain range of the second detection signal is different from a time domain range of the second signal.

With reference to the tenth not-claimed aspect, in a possible implementation of the tenth aspect, the second signal comes from an intersection radar at an intersection, and the second signal is used to indicate a predicted interference time-frequency range in a first road direction of the intersection; and
the second detection apparatus is located at a first lane in a second road direction, and the first lane is a lane that allows driving toward the first road direction.

According to an eleventh not-claimed aspect, an embodiment of this application further provides a first detection apparatus, including a listening module, a communications interface, and a processor. The processor is configured to invoke one or more computer programs stored in a memory, so that the first detection apparatus implements the method according to the second aspect or the possible implementation of the second aspect.

In a possible not-claimed implementation of the eleventh aspect, the processor executes the one or more programs stored in the memory, so that the first detection apparatus implements the following operations:
listening, by using the listening module, for at least one signal coming from at least one direction, where the at least one signal includes a first signal corresponding to a first direction; and
indicating a predicted interference time-frequency range to a communications module by using the communications interface, where the interference time-frequency range corresponds to a first frequency domain range and a first time domain range, and the predicted interference time-frequency range and a time-frequency range of the first signal meet at least one of the following:
   a frequency domain range of the first signal is a subset of the first frequency domain range; or
   a time domain range of the first signal is a subset of the first time domain range.

With reference to the eleventh not-claimed aspect, in a possible implementation of the eleventh aspect, the processor is further configured to:
obtain time domain information and frequency domain information of the at least one signal, where the time domain information includes at least one of a period, an offset, and duration.

With reference to the eleventh not-claimed aspect, in a possible implementation of the eleventh aspect, the first signal includes at least one sub-signal, the interference time-frequency range includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

With reference to the eleventh not-claimed aspect, in a possible implementation of the eleventh aspect, the first direction is a first road direction of an intersection, and the communications module is configured to indicate the predicted interference time-frequency range to a mobile terminal located in a second road direction of the intersection.

According to a twelfth not-claimed aspect, an embodiment of this application further provides a second detection apparatus, including a communications interface, a signal transmitting module, and a processor. The processor is configured to invoke one or more computer programs stored in a memory, so that the first detection apparatus implements the method according to the second aspect or the possible implementation of the second aspect.

In a possible not-claimed implementation of the twelfth aspect, the processor executes the one or more programs stored in the memory, so that the first detection apparatus implements the following operations:
receiving, through the communications interface, indication information sent by a first detection apparatus, where the indication information indicates a predicted interference time-frequency range, and the interference time-frequency range corresponds to a first frequency domain range and a first time domain range; and
transmitting a second detection signal, where a time-frequency range of the first signal and the interference time-frequency range meet at least one of the following:
   a frequency domain range of the second detection signal is different from the first frequency domain range; or
   a time domain range of the second detection signal is different from the first time domain range.

With reference to the twelfth not-claimed aspect, in a possible implementation of the twelfth aspect, the first detection apparatus is an intersection radar at an intersection, and the interference time-frequency range is specifically used to indicate an interference time-frequency range in a first road direction of the intersection. Further, the second detection apparatus is located at a first lane in a second road direction, and the first lane is a lane that allows driving toward the first road direction.

According to a thirteenth not-claimed aspect, an embodiment of this application further provides a radar, including a transmit end, a receive end, and a memory. The processor is configured to invoke computer program instructions stored in the memory, so that the radar implements the method according to any one of the first aspect or the possible implementations of the first aspect, or implements the method according to any one of the third aspect or the possible implementations of the third aspect.

Further, the radar may be a laser radar, a millimeter-wave radar, an ultrasonic radar, an infrared sensor, or the like. Optionally, the radar may be an intersection radar or a vehicle-mounted radar, or may be another radar system, for example, a radar installed on an apparatus such as an unmanned aerial vehicle, a track vehicle, a bicycle, a signal light, a speed measurement apparatus, or a base station.

According to a fourteenth not-claimed aspect, an embodiment of this application further provides a terminal, including a transmit end, a receive end, and a memory. The processor is configured to invoke computer program instructions stored in the memory, so that the terminal implements the method according to the second aspect or the possible implementation of the second aspect, or implements the method according to the fourth aspect or the possible implementation of the fourth aspect.

Further, the terminal may be a detection apparatus, or further, may be a terminal that includes a detection apparatus, for example, may be a detection apparatus such as a laser radar, a millimeter-wave radar, an ultrasonic radar, or an infrared sensor, or may be an intelligent terminal or a transportation vehicle such as a vehicle, an unmanned aerial vehicle, or a robot that includes a detection apparatus such as a laser radar, a millimeter-wave radar, an ultrasonic radar, or an infrared sensor.

According to a fifteenth not-claimed aspect, an embodiment of this application discloses a computer-readable storage medium. The computer-readable storage medium stores a computer program. When the computer program is run on one or more processors, the method according to any one of the first aspect or the possible implementations of the first aspect is implemented, or the method according to the second aspect or the possible implementation of the second aspect is implemented, or the method according to any one of the third aspect or the possible implementations of the third aspect is implemented, or the method according to the fourth aspect or the possible implementation of the fourth aspect is implemented.

According to a sixteenth not-claimed aspect, an embodiment of this application discloses a computer program product. When the computer program product is run on one or more processors, the method according to any one of the first aspect or the possible implementations of the first aspect is implemented, or the method according to the second aspect or the possible implementation of the second aspect is implemented, or the method according to any one of the third aspect or the possible implementations of the third aspect is implemented, or the method according to the fourth aspect or the possible implementation of the fourth aspect is implemented.

According to a seventeenth not-claimed aspect, an embodiment of this application discloses a chip system. The chip system includes a communications interface and at least one processor. The communications interface is configured to provide information input/output for the at least one processor. The processor is configured to invoke computer instructions from the communications interface, to implement the method according to any one of the first aspect or the possible implementations of the first aspect, or implement the method according to the second aspect or the possible implementation of the second aspect, or implement the method according to any one of the third aspect or the possible implementations of the third aspect, or implement the method according to the fourth aspect or the possible implementation of the fourth aspect.

According to an eighteenth not-claimed aspect, an embodiment of this application discloses a detection system. The detection system includes a radar and a terminal. The radar includes the first detection apparatus according to any one of the fifth aspect or the possible implementations of the fifth aspect, and the terminal includes the second detection apparatus according to the sixth aspect or the possible implementation of the sixth aspect.

According to a nineteenth not-claimed aspect, an embodiment of this application discloses a detection system. The detection system includes a radar and a terminal. The radar includes the first detection apparatus according to any one of the seventh aspect or the possible implementations of the seventh aspect, and the terminal includes the second detection apparatus according to the eighth aspect or the possible implementation of the eighth aspect.

In the following description, embodiments which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional. Furthermore, in the brief drescription of the drawings below, the figures relating to "embodiments of the invention" are indicated whilst the other emobidments denoted as not claimed above, are also understood as not claimed in the text below.

### BRIEF DESCRIPTION OF DRAWINGS

The following describes accompanying drawings used in embodiments of this application.
FIG. 1 is a schematic diagram of mutual interference between radars according to an embodiment of this application;
FIG. 2 is a schematic diagram of a waveform of a single transmit period of a radar signal according to an embodiment of this application;
FIG. 3 is a time-frequency diagram of a plurality of transmit periods of a radar signal according to an embodiment of this application;
FIG. 4 is a schematic diagram of a time domain range of a transmit signal according to an embodiment of this application;
FIG. 5 is a schematic diagram of a structure of a radar according to an embodiment of this invnention;
FIG. 6 is a schematic diagram of a transmit signal, a receive signal, an interference signal, and an intermediate frequency signal according to an embodiment of this application;
FIG. 7 is a schematic diagram of a time-frequency resource occupation status according to an embodiment of this application;
FIG. 8 is a schematic diagram of a scenario of a detection method according to an embodiment of this application;
FIG. 9 is a schematic diagram of a scenario of another detection method according to an embodiment of this invention;
FIG. 10 is a schematic flowchart of a detection method according to an embodiment of this invention;
FIG. 11 is a schematic diagram of a structure of a laser radar and a schematic diagram of a listening scenario according to an embodiment of this application;
FIG. 12 is a schematic diagram of a listening occasion according to an embodiment of this application;
FIG. 13 is a schematic diagram of frequency ranges of a first signal and a second signal according to an embodiment of this application;
FIG. 14 is a schematic diagram of time-frequency ranges of a first signal and a second signal according to an embodiment of this application;
FIG. 15 is a schematic diagram of time-frequency ranges of a sub-signal and a second signal according to an embodiment of this application;
FIG. 16 is a schematic diagram of a manner of transmitting a second signal according to an embodiment of this application;
FIG. 17 is a schematic diagram of another manner of transmitting a second signal according to an embodiment of this application;
FIG. 18 is a schematic diagram of still another manner of transmitting a second signal according to an embodiment of this application;
FIG. 19 is a schematic diagram of a scenario of still another detection method according to an embodiment of this application;
FIG. 20 is a schematic diagram of time-frequency ranges of a second signal and a second detection signal according to an embodiment of this application;
FIG. 21 is another schematic diagram of time-frequency ranges of a second signal and a second detection signal according to an embodiment of this application;
FIG. 22 is still another schematic diagram of time-frequency ranges of a second signal and a second detection signal according to an embodiment of this application;
FIG. 23 is a schematic diagram of a scenario of still another detection method according to an embodiment of this application;
FIG. 24 is a schematic flowchart of another detection method according to an embodiment of the invention;
FIG. 25 is a schematic diagram of a scenario of still another detection method according to an embodiment of this application;
FIG. 26 is a schematic diagram of a structure of a detection apparatus according to an embodiment of this invention;
FIG. 27 is a schematic diagram of a structure of another detection apparatus according to an embodiment of this application;
FIG. 28 is a schematic diagram of a structure of still another detection apparatus according to an embodiment of this invention;
FIG. 29 is a schematic diagram of a structure of still another detection apparatus according to an embodiment of this application;
FIG. 30 is a schematic diagram of a structure of still another detection apparatus according to an embodiment of this invention; and
FIG. 31 is a schematic diagram of a structure of still another detection apparatus according to an embodiment of this application.

### DESCRIPTION OF EMBODIMENTS

The following describes embodiments of this application with reference to accompanying drawings in the embodiments of this application. It should be noted that, in this application, the expression such as "example" or "for example" is used to represent giving an example, an illustration, or a description. Any embodiment or design solution described as "example" or "for example" in this application shall not be interpreted as being more preferred or advantageous than other embodiments or design solutions. To be precise, the expression such as "example" or "for example" is intended to present a related concept in a specific manner.

The expression "at least one" mentioned in the embodiments of this application means one or more, and "a plurality of" means two or more. The expression "at least one of the following (items)" or a similar expression thereof means any combination of these items, including a single item (item) or any combination of a plurality of items (items). For example, at least one (item) of a, b, or c may represent a, b, c, (a and b), (a and c), (b and c), or (a, b, and c), where a, b, and c each may be singular or plural. The expression "and/or" describes an association relationship between associated objects and represents that three relationships may exist. For example, A and/or B may represent the following three cases: Only A exists, both A and B exist, and only B exists, where A and B each may be singular or plural. The character "/" generally indicates an "or" relationship between associated objects.

In addition, unless otherwise specified, in the embodiments of this application, ordinal numbers such as "first" and "second" are used to distinguish between a plurality of objects, and are not used to limit an order, a time sequence, priorities, or degrees of importance of the plurality of objects. For example, "first detection apparatus" and "second detection apparatus" are merely intended to distinguish between different detection apparatuses, but do not indicate differences between structures, detection principles, degrees of importance, and the like of the two apparatuses.

For ease of understanding, the following first explains some terms in the embodiments of this application.

### 1. Field of view (field of view, FOV):

A field of view refers to a world that can be seen, and is also referred to as a field of view. During target detection, a line-of-sight (line of sight, LOS) area in which signal (for example, radio wave or laser) transmission is uninterrupted needs to exist between a transmitting module and a target object or between a receiving module and a target object. Such a line-of-sight area may be understood as a field of view. In an FOV, a signal can be transmitted to a receiver or a target object.

In the real world, there is often an obstacle such as a building or a tree obstructing direct transmission of a line-of-sight area, and this affects LOS and forms a non-line-of-sight (not line of sight, NLOS) area.

### 2. Detection apparatus:

A detection apparatus mentioned in this application may be a radar (or referred to as a radar apparatus), or may be another apparatus used for detection (for example, a ranging apparatus). A working principle of the detection apparatus is detecting a corresponding target object by transmitting a signal (or referred to as a detection signal) and receiving a reflected signal (or referred to as an echo signal) reflected by the target object. Optionally, a signal transmitted by a radar may be referred to as a radar signal, and a reflected signal that is reflected by a target object and that is received by a radar may also be referred to as a radar signal.

A radar mentioned in the embodiments of this application may be a (radio-wave-based) radar (radar), or may be a laser radar (lidar). In addition, the embodiments of this application are not only applicable to a frequency modulated continuous wave (frequency modulated continuous wave, FMCW) radar and a frequency modulated continuous wave laser radar (FMCW lidar), but also applicable to a pulse radar (pulse radar) and a pulse laser radar (pulse lidar). The radar in the embodiments of this application can be applied to various fields such as intelligent transportation, self driving, atmospheric environment monitoring, geographic mapping, and unmanned aerial vehicles, and can implement one or more of functions such as target detection, distance measurement, speed measurement, target tracking, and imaging recognition.

This application may be applied to a roadside detection apparatus (for example, an intersection radar), a vehicle-mounted detection apparatus (a vehicle-mounted radar), or the like, but may also be applied to another detection system, for example, a radar installed on an apparatus such as an unmanned aerial vehicle, a track vehicle, a bicycle, a signal light, a speed measurement apparatus, or a base station. An installation position and a function of the detection apparatus are not limited in this application.

### 3. Signal transmit period, initial frequency, and sweep bandwidth:

A transmit period (or referred to as a sweep period, a sweep time, sweep duration, or the like) of a transmit signal of a detection apparatus is a period in which the detection apparatus transmits a radar signal of a complete waveform. A detection apparatus usually sends signals in a plurality of transmit periods within continuous duration.

Usually, at the beginning of a transmit period, a detection apparatus transmits a signal at a frequency. The frequency is referred to as an initial frequency of the detection apparatus. In addition, a transmit frequency of some detection apparatuses changes in a transmit period based on an initial frequency. Meanwhile, there are also some detection apparatuses transmitting at a constant frequency, and a transmit frequency of such detection apparatuses does not change in a transmit period.

Sweep bandwidth of a detection apparatus is bandwidth of a frequency band of a waveform of a transmit signal sent by the detection apparatus. Herein, it should be noted that the "sweep bandwidth" is defined for ease of description, may also be referred to as operating bandwidth, and is technically bandwidth of a waveform of a transmit signal sent by a detection apparatus. Further, a frequency band of a waveform of a radar signal sent by a detection apparatus may be referred to as a sweep band.

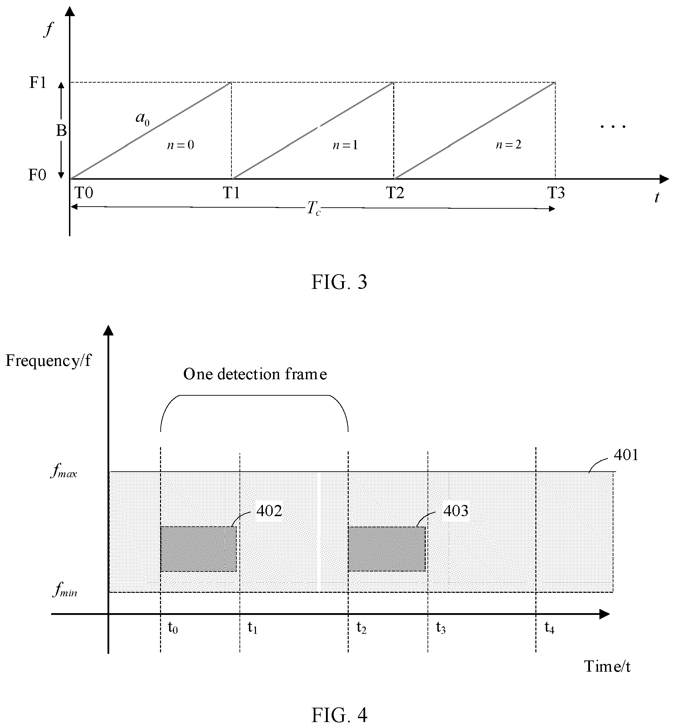

Usually, a detection time of a detection apparatus includes a plurality of transmit periods. A frequency modulated continuous wave is used as an example. Referring to FIG. 2 and FIG. 3, FIG. 2 is a schematic diagram of a waveform of a possible frequency modulated continuous wave according to an embodiment of this application, and FIG. 3 is a time-frequency diagram of a possible multi-period frequency modulated continuous wave according to an embodiment of this application. It can be learned that a detection system may transmit, in a time segment from T0 to T1, the frequency modulated continuous wave shown in FIG. 2, and a relationship between a time and frequency thereof is shown in the time segment from T0 to T1 in FIG. 3. Further, duration (or referred to as a detection time) in which the detection system performs target detection may include one or more transmit periods. For example, as shown in FIG. 3, a time segment Tc may include three transmit periods.

It should be noted that the case in which three transmit periods are included is merely used as an example herein. There may be one or more transmit periods included in the detection time. A quantity of transmit periods included in the detection time is not limited in this application.

### 4. Time-frequency resource and time-frequency range:

A time and a frequency are two most important physical quantities for describing a signal. A time domain and frequency domain of a signal are closely related to each other. In the embodiments of this application, a time resource and a frequency resource are collectively referred to as a time-frequency resource. FIG. 4 is a schematic diagram of a possible time-frequency resource according to an embodiment of this application. An example in which a detection apparatus sends a signal in a form of a detection frame is used. The detection apparatus may transmit a detection signal in a supported time segment (for example, a time segment from 0 ms to 100 ms), and an operating frequency range supported by the detection apparatus is a frequency band (fmin, fmax). In this case, the time segment from 0 ms to 100 ms and the frequency band (fmin, fmax) may form a rectangle (as shown by an area 401). The rectangle indicates a time-frequency resource that can be used by the detection apparatus. The time segment from 0 ms to 100 ms is a time domain resource that can be used by the detection apparatus, and the operating frequency range (fmin, fmax) is a frequency resource that can be used by the detection apparatus.

A time-frequency range of a signal may be considered as a part used for transmitting the signal in a time-frequency resource. In addition, in terms of a time domain range, the time domain range mentioned in this application is not a time domain resource actually occupied by a signal, but is a time segment indicated by at least one of a period, an offset, or duration. In terms of a frequency range, the frequency domain range mentioned in this application is a frequency band occupied by a signal in a frequency domain resource.

Optionally, a time-frequency range may be indicated by using time domain information and/or frequency domain information. In time domain, time domain information may include at least one of a period, an offset, duration, or the like of a signal. In frequency domain, frequency domain information may indicate an initial frequency, a highest frequency, frequency distribution, and the like of a signal. The "frequency distribution" may include but is not limited to continuous or discrete frequency domain bandwidth.

For example, because a transmit signal may be sent in a form of a detection frame, the detection frame may include an idle time and a detection time. For example, referring to FIG. 4, an example in which an initial time is 0 ms is used, and a time segment from 10 ms to 20 ms is one detection time of the detection apparatus. The idle time of the detection frame, for example, from 0 ms to 10 ms, or from 20 ms to 50 ms, may be used by the detection apparatus to perform operations such as data processing, cache cleaning, and data dumping.

A period of a detection frame, an offset between a start time of a detection time and a start time of a detection period, duration of the detection time, and the like may all belong to time domain information of a signal. For example, referring to FIG. 4, an example in which 50 ms is a detection period and an initial time is 0 is used. In this case, 0 ms to 50 ms is a detection period of the detection apparatus, where the detection time starts from the 10^{th} ms and lasts for 10 ms. Therefore, a period of the signal is 50 ms, an offset of the signal is 10 ms, and duration of the signal is 10 ms. A time domain range of the signal is a range from the 10^{th} ms to the 20^{th} ms in each period, as shown by an area 402 and an area 403.

The following describes a system architecture and a service scenario in the embodiments of this application. It should be noted that the system architecture and the service scenario described in this application are intended to describe the technical solutions in this application more clearly, and do not constitute a limitation on the technical solutions provided in this application. A person of ordinary skill in the art may know that, with evolution of the system architecture and emergence of new service scenarios, the technical solutions provided in this application are also applicable to similar technical problems.

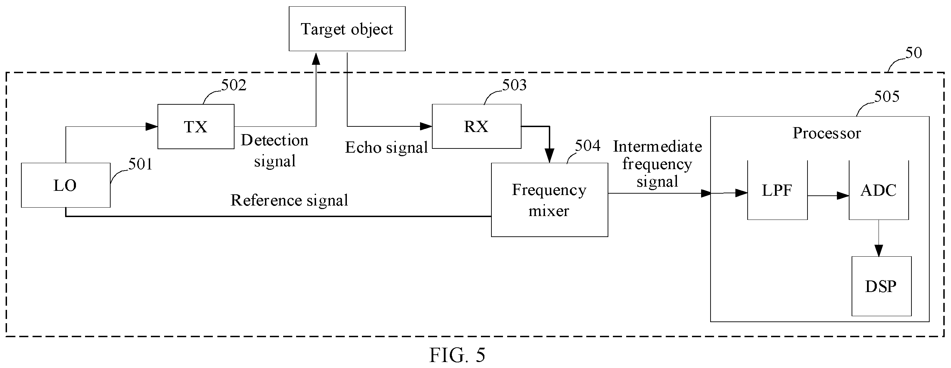

Herein, an FMCW radar is used as an example to describe a detection principle. FIG. 5 is a schematic diagram of a structure of an FMCW radar 50 according to an embodiment of this application. An FMCW radar generally includes an oscillator (local oscillation, LO) 501, a transmit antenna (TX) 502, a receive antenna (RX) 503, a frequency mixer (mixer) 504, and a processor 505. The processor may include processing apparatuses such as a low-pass filter (low pass filter, LPF), an analog-to-digital converter (analog-to-digital converter, ADC), and a digital signal processor (digital signal processor, DSP).

The oscillator generates a signal whose frequency linearly increases with time, where the radar signal is usually a frequency modulated continuous wave. A part of the signal is output to the frequency mixer as a local oscillator signal, and a part of the signal is transmitted by using the transmit antenna. The receive antenna receives an echo signal reflected by a target object after the transmitted radar signal meets the target object. The frequency mixer performs frequency mixing on the echo signal and the local oscillator signal to obtain an intermediate frequency signal. Information such as a relative distance, speed, and angle between the target object and the radar system can be determined by using the intermediate frequency signal. The intermediate frequency signal is transmitted to the processor after passing through the low-pass filter and undergoing amplification processing. The processor processes the received signal (usually performs fast Fourier transform, spectrum analysis, and the like on the received signal) to obtain the information such as the relative distance, speed, and angle between the target object and the radar system. Further, during the foregoing processing of the intermediate frequency signal, fast Fourier transform is usually performed in a fast time and a slow time respectively. The fast time refers to a time dimension of a single reflection period of the FMCW radar, and the slow time refers to a time dimension (including a plurality of transmit periods of the FMCW radar) of a detection frame of the FMCW radar. The target distance and speed are obtained, and target angle information can be further obtained by using a plurality of receive channels.

In addition, the processor may further output the obtained information such as the distance, speed, and angle to a controller (not shown in the figure), so that the controller makes a corresponding decision, for example, controlling a behavior of a vehicle. Optionally, the controller may be outside the radar, or may be inside the radar.

A waveform of a frequency modulated continuous wave of a millimeter-wave radar is usually a sawtooth wave or a triangular wave. The following uses a sawtooth wave as an example to describe in detail a ranging principle of a millimeter-wave radar. A ranging principle of a triangular wave is similar thereto. As shown in FIG. 2 and FIG. 3 described above, a linear frequency modulated continuous wave is a signal whose frequency linearly changes with time. A frequency difference between a transmit signal and a receive signal (that is, a frequency of an intermediate frequency signal) is in a linear relationship with a delay. A longer distance from a target object indicates a later time at which a reflected signal is received, and a larger frequency difference between the reflected signal and the transmit signal. Therefore, a distance between the radar and the target object can be determined by determining a magnitude of the frequency of the intermediate frequency signal. If a frequency of an interference signal is the same as a frequency range or a time domain range used by the FMCW radar, a detection result of the FMCW radar may be affected.

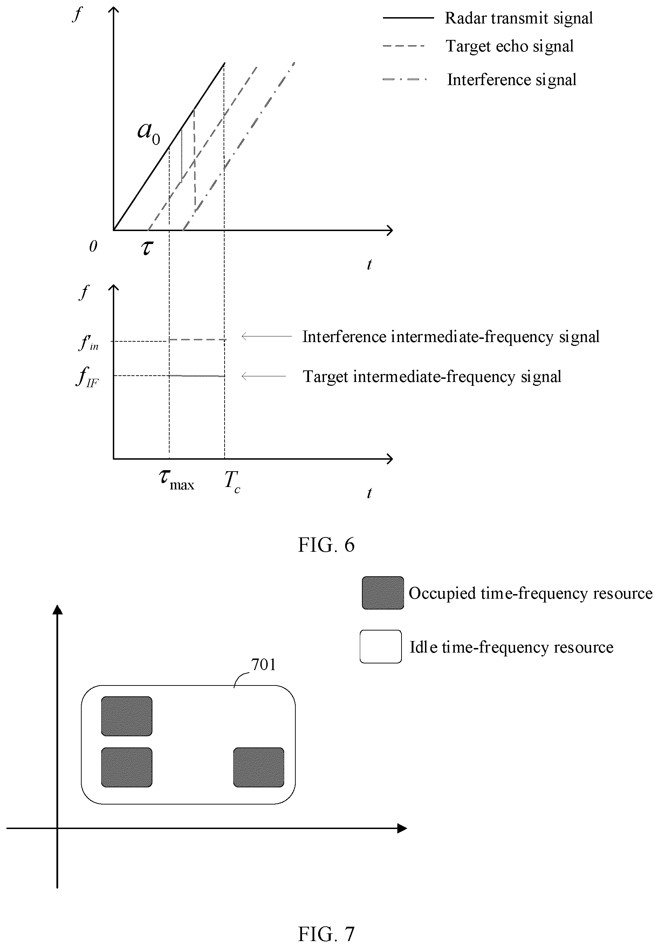

For example, referring to FIG. 6, because a frequency range of an interference signal is the same as a frequency range used by a radar, and slopes by which the interference signal and an echo signal linearly change with time are also the same, the radar may obtain an intermediate frequency signal of a real signal and an intermediate frequency signal of the interference signal by using a same processing manner, and existence of the intermediate frequency signal of the interference signal may cause a false alarm of the radar. For example, referring to the scenario shown as an example in FIG. 1, a radar 1 may receive an echo signal of a target object 1 within an echo signal receiving time, to obtain an intermediate frequency signal of the real echo signal. The radar 1 may further receive a signal transmitted by a radar 2. After processing the signal, the radar obtains an intermediate frequency signal of an interference signal. After processing the real intermediate frequency signal, the radar may learn that there is the target object 1 ahead. After processing the intermediate frequency signal of the interference signal, the radar 1 may consider that there is a target object 2 ahead. However, the target object 2 is actually nonexistent. Such a case is referred to as a "false alarm" or "ghost". After a false alarm is generated, a vehicle at which the radar 1 is located may turn for avoidance, decelerate, or abruptly brake when there is no object ahead, and driving comfort is consequently reduced.

In addition, the interference signal may cover the real echo signal (or submerge the real echo signal), and consequently cause missed detection of the radar signal. For example, within the echo signal receiving time, the radar 1 receives the echo signal of the target object 1 and the signal transmitted by the radar 2 (or an echo signal corresponding to a transmit signal of the radar 2). If frequency ranges of signals of the radar 2 and the radar 1 are the same, after the radar 1 processes the signal transmitted by the radar 2, the real echo signal may not be sufficiently obvious, or even be covered. This brings difficulty for target object detection, and increases a possibility of missed detection. After missed detection occurs, when there is an object ahead, a self-driving vehicle mistakenly considers that there is no object ahead, and does not decelerate, avoid, or brake. This causes a traffic accident, reduces vehicle driving safety, and endangers personal safety of a passenger.

A detection apparatus may reduce or avoid interference from another signal by using an interference listening (listen before talk, LBT) technology. Specifically, a detection apparatus may listen for an interference signal by using a receive end, avoid a time-frequency resource used by the interference signal, and select an appropriate time-frequency resource for target detection. For example, FIG. 7 is a schematic diagram of a possible time-frequency resource occupation status according to an embodiment of this application. An area 701 shows a time-frequency resource supported by a detection apparatus. Through interference listening, the detection apparatus may obtain an occupied time-frequency resource, as shown by a shaded part in FIG. 7. The detection apparatus may avoid a time domain range or frequency domain range corresponding to the occupied time-frequency resource, and perform target detection by using an unoccupied resource in a time domain range or frequency domain range.

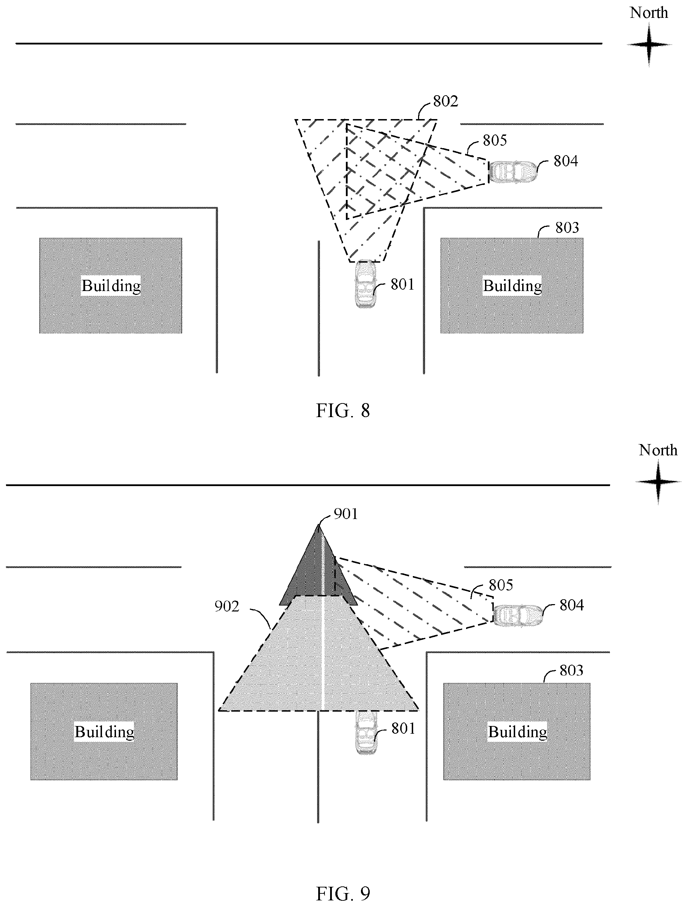

However, in the foregoing interference listening method, a time-frequency resource occupation status can be accurately determined only when there is sufficient time for listening. For example, when a detection apparatus for interference listening is a vehicle-mounted radar, in some scenarios, such as a crossroads and a T-junction, due to NLOS caused by spatial distribution or physical blocking (such as a building or a tree), vehicle-mounted radars can sense a signal of each other only after fields of view (field of view, FOV) overlap to a comparatively large extent when vehicles in different driving directions are comparatively close to each other or after the vehicles turn. For example, FIG. 8 is a schematic diagram of a possible radar detection scenario according to an embodiment of this application. A field of view of a vehicle 801 in a south direction of a crossroads may be represented as a field of view 802. Because the field of view of the vehicle 801 is comparatively small, or due to blocking by a building 803, the vehicle 801 cannot sense an interference signal in an east direction or a west direction. In consideration of a case, if a frequency range of a transmit signal of a radar in a vehicle 804 is the same as a frequency range of a transmit signal of a radar in the vehicle 801, the radar signal of the vehicle 804 causes comparatively large interference to the vehicle 801. From distribution locations of fields of view, it can be learned that the radar signal of the vehicle 804 is in a non-line-of-sight area of the vehicle 801, and the vehicle 801 cannot sense the transmit signal of the radar in the vehicle 804. Therefore, when the vehicle 801 turns toward a driving direction of the vehicle 804, the vehicle 801 may not be able to avoid interference from the radar signal of the vehicle 804. This causes a false alarm or missed detection of a signal, and affects driving safety.

It can be learned that, due to an NLOS case, a comparatively small amount of time is left for listening, and consequently, a listening effect is poor, which affects an interference avoidance effect. In view of this, the technical solutions in the embodiments of this application are proposed. In the embodiments of this application, a first detection apparatus listens for a first signal in a first direction, to obtain a predicted time-frequency range in which interference may exist. The first detection apparatus may send a second signal toward a second direction, and the second signal may indicate, to a vehicle in the second direction, the predicted time-frequency range in which interference may exist.

FIG. 9 is a schematic diagram of an application of a possible radar detection system according to an embodiment of this application. It can be learned that a first detection apparatus 901 may be disposed at a location at which NLOS exists (for example, a crossroads or a T-junction). The first detection apparatus 901 may sense a first signal transmitted by a vehicle 804 located in an east direction, and then send a second signal toward a south direction. The second signal may indicate, to a second detection apparatus 901, a time-frequency range in which interference exists. Referring to FIG. 9, it is not difficult to learn that the second signal transmitted by the intersection radar is within a field of view of the vehicle 801. Therefore, the vehicle 801 can sense the second signal, to avoid a time-frequency range of the second signal as far as possible by using an interference listening and avoidance technology, so that the vehicle 801 reduces or avoids interference from a signal transmitted by the vehicle 804. This improves driving safety of the vehicle 801.

Specifically, the vehicle 801 may obtain, by listening for the second signal, the time-frequency range that is indicated by the second signal and in which interference exists, and further avoid, when the vehicle 801 subsequently transmits a detection signal, the time-frequency range in which interference exists. It can be understood that a possible design is considered: If a vehicle avoids, when subsequently transmitting a detection signal, a time domain range in which interference exists, a time domain range of the detection signal of the vehicle is different from a time domain range of an interference signal, so that the time domain range of the interference signal can be avoided, thereby achieving interference avoidance. Similarly, another possible design is as follows: If a frequency domain range in which interference exists is avoided when a detection signal is transmitted, a signal in another frequency domain range can be filtered out during processing, thereby achieving interference avoidance.

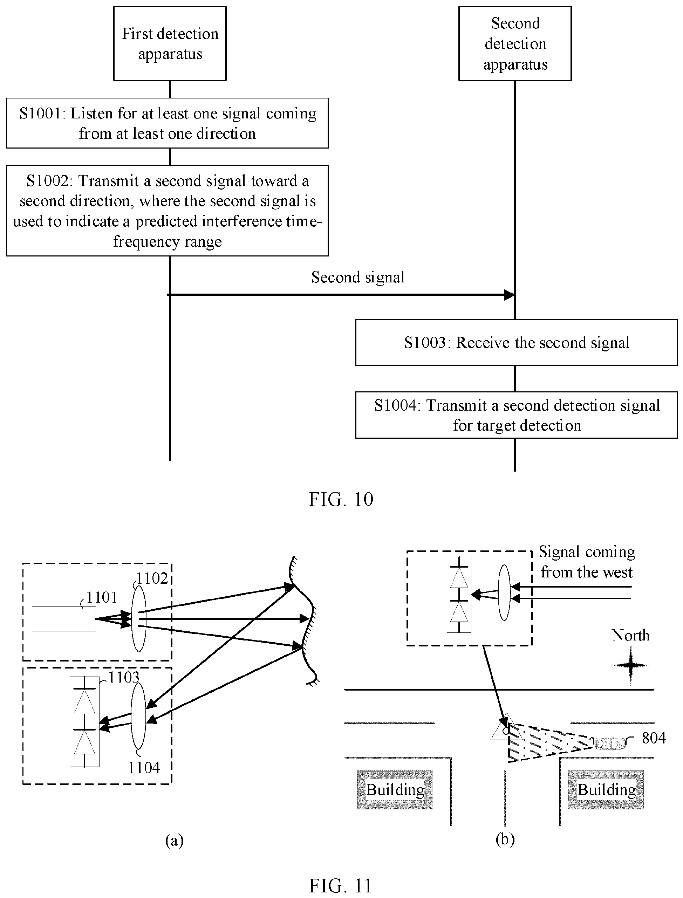

FIG. 10 is a schematic flowchart of a detection method according to an embodiment of this application. Optionally, the method may be implemented based on the detection system shown in FIG. 9, or may be implemented based on components in the FMCW radar shown in FIG. 5, or certainly may be implemented based on components in another radar system (for example, a pulse radar). The detection method includes at least the following steps.

Step S1001: A first detection apparatus listens for at least one signal coming from at least one direction. The at least one signal may include a first signal corresponding to a first direction.

Specifically, the first detection apparatus may be a radar or another apparatus with a detection function, for example, may be at least one of a millimeter-wave radar, an ultrasonic radar, a laser radar, an infrared detector, a ranging apparatus, and the like. The first detection apparatus may be implemented in various forms. For example, the first detection apparatus may be a single fixed radar, which supports receiving the signal in the at least one direction and supports transmitting a signal toward a second direction. For another example, the first detection apparatus may alternatively be a single rotating radar, and the single rotating radar may listen for a target of the first-direction signal through mechanical rotation. For still another example, the first detection apparatus may alternatively include a combination of a plurality of radars (each of the radars performs detection for one direction), and the radars may be combined in a centralized manner or a distributed manner. Regardless of an implementation form, these implementation forms have a common characteristic, that is, the first detection apparatus can listen for a signal coming from at least one direction.

The at least one direction may be one direction. For example, the first detection apparatus may listen for a signal that is from a west direction. Alternatively, the at least one direction may be a plurality of directions. For example, the first detection apparatus is deployed as having two listening modules, and the two listening modules may respectively listen for signals coming from a west direction and an east direction. In a specific implementation scenario, the at least one direction may also be understood as a direction range. For example, the first detection apparatus can sense a signal in a direction range of 30 degrees right and left of the due west direction. It should be noted that directions such as east, west, south, and north herein are merely used as examples, and a specific direction depends on a configuration of the detection apparatus, calibrated data, or precision of the detection apparatus.

Usually, there are different signals in different directions, and there may be a plurality of signals in a same direction. Therefore, the first detection apparatus may listen for at least one signal coming from at least one direction. For example, the at least one signal may include the first signal corresponding to the first direction. For another example, the at least one signal may further include a third signal corresponding to a third direction.

In a possible implementation, the first detection apparatus may be deployed at an intersection or a roadside, and the intersection may be specifically a crossroads, a T-junction, a turn, or the like. It should be understood that the intersection in this application may further include an intersection of a route. Optionally, when the first detection apparatus is deployed at an intersection or a roadside, the at least one direction may be one or more road directions. For example, the first direction may be specifically a first road direction, used to indicate a road distribution direction relative to the intersection.

When listening for at least one signal coming from at least one direction, the first detection apparatus usually receives the signal by using an antenna or the like. For example, the first detection apparatus is the frequency modulated continuous wave radar 50 shown in FIG. 5. The radar 50 may listen, by using the receive antenna 503 or the like, for at least one signal coming from at least one direction. Further, the at least one signal may be subsequently sent to a processor such as the frequency mixer for processing.

For a laser radar, one of various components, for example, a receiving lens, a light splitter (optional), and a reflector (optional), of a receiving part is further used during listening. For example, FIG. 11 is a schematic diagram of a possible working principle of a laser radar according to an embodiment of this application. Referring to (a) in FIG. 11, a transmitter 1101 may be, for example, a tunable laser (Tunable Laser, TL), and may transmit a laser signal (and specifically, may further include a transmit end apparatus such as a collimation apparatus). The laser signal may be transmitted to a target object through a lens 1102. Correspondingly, the laser signal is reflected back by the target object to form an echo signal. The echo signal is received by a receiving module 1104 through a receiving lens 1103, so that an electrical signal is formed in the receiving module 1104 (for example, one or more of an optical-to-electrical converter, an array detector, and an avalanche photodiode array). The electrical signal is sent to a signal processing apparatus for processing. Referring to (b) in FIG. 11, when the laser radar shown in (a) in FIG. 11 performs listening, the first signal may be listened for by using a receive end (a receiving lens 1105, a receiving module 1106, or the like). For example, when the laser radar is installed at a crossroads, the laser radar may listen for a radar signal sent by a vehicle 804 located in an east direction (which is merely an example, and may alternatively be another direction in a specific implementation process). The first signal may include the radar signal sent by the vehicle 804.

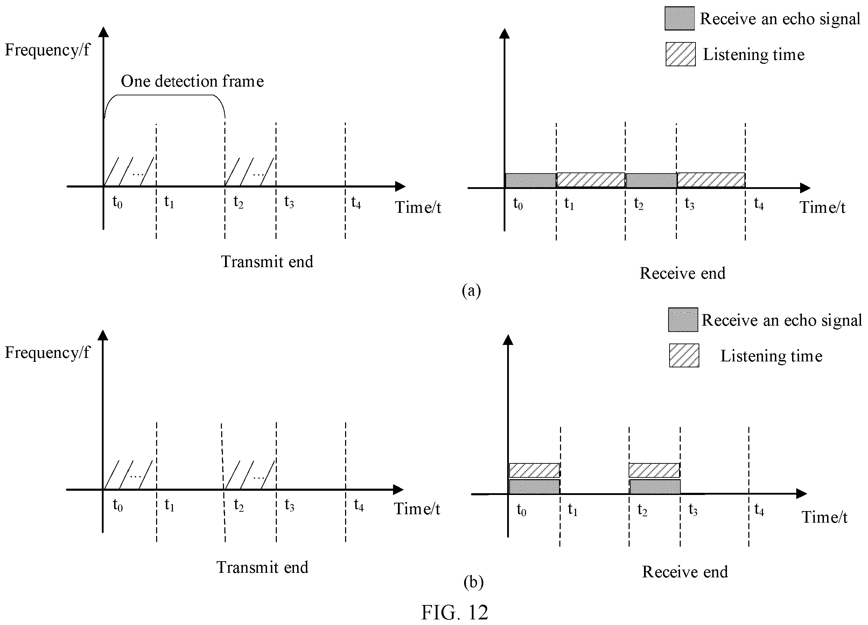

In a design, the first detection apparatus may listen for the first signal in an idle time of a detection frame of the first detection apparatus, a detection time of the detection frame, or a time in which the entire detection frame is located. This application provides examples of two possible cases of a listening occasion:
Case 1: The first detection apparatus may perform listening in the idle time of the detection frame. FIG. 12 is a schematic diagram of a possible listening occasion according to an embodiment of this application. Referring to (a) in FIG. 12, t0 to t2 may be considered as a period of one detection frame, where t0 to t1 is the detection time of the radar, and t1 to t2 is the idle time of the radar. The first detection apparatus may listen, in the idle time (t1 to t2) of the detection frame, for the at least one signal coming from the at least one direction. In a possible case, the first detection apparatus itself also needs to perform a detection task. Therefore, the first detection apparatus may transmit a detection signal (for ease of description, in this embodiment of this application, the detection signal of the first detection apparatus is referred to as a first detection signal) and receive an echo signal in the detection time of the detection frame, and perform listening on the at least one direction in the idle time.
Case 2: The first detection apparatus performs listening in the detection time of the detection frame. Referring to (b) in FIG. 12, the first detection apparatus may listen, in the detection time (t0 to t1) of the detection frame, for the at least one signal coming from the at least one direction. It can be learned that the receive end of the first detection apparatus may listen for an interference signal in the detection time of the detection frame. Further, optionally, the first detection apparatus may subsequently separate the at least one signal from the interference signal through signal processing.

It should be noted that, in some possible designs, the detection frame may include no idle time. The foregoing description in this application is based on a general case. However, this application is also applicable to a detection form in which no idle time is included. For example, the first detection apparatus transmits a detection signal at a specific time interval, and this may also be considered as a detection frame that includes a detection time and an idle time. For another example, the first detection apparatus may be alternatively provided with a plurality of receive ends, and perform listening by using one or more of the plurality of receive ends. For another example, the first detection apparatus may perform listening at any time or in any time segment.

Step S1002: The first detection apparatus transmits a second signal toward a second direction, where the second signal is used to indicate a predicted interference time-frequency range.

The interference time-frequency range may be understood as a time-frequency range in which interference exists. Optionally, the interference time-frequency range may be obtained based on at least one signal.

For example, the first detection apparatus may use a time domain range and/or frequency domain range of the at least one signal as the interference time-frequency range.

For another example, the first detection apparatus may use a frequency domain range that is in a frequency domain range of the at least one signal and that belongs to operating bandwidth of the first detection apparatus, as a frequency domain range in which interference exists.

Further, optionally, the first detection apparatus listens for at least one signal, and obtains time domain information and/or frequency domain information of the at least one signal. Further, the first detection apparatus may predict, based on the obtained time domain information, a time domain range in which interference exists, and/or predict, based on the obtained frequency domain information, a frequency domain range in which interference exists.

The frequency domain information includes an initial frequency, a highest frequency, and the like of the at least one signal. The time domain information includes at least one of a period, an offset, and duration. For details, refer to the foregoing detailed descriptions of FIG. 4.

In some possible scenarios, one or more of the period, the duration, or the offset may be preset, or may comply with a standard definition, or may be obtained through detection based on the signal. This application provides a possible case as an example. For example, the period and the duration are predefined time domain information, and the offset is time domain information obtained through processing based on the at least one signal. The first detection apparatus may obtain the offset of the at least one signal through detection based on the at least one received signal. Then, the first detection apparatus may obtain a time domain range of the at least one signal based on the offset, the period, and the duration.

The indication herein may include: A time-frequency range of the second signal includes the predicted interference time-frequency range, so as to indicate the predicted interference time-frequency range.

In some possible implementations, alternatively, a frequency domain range in a time-frequency range of the second signal may include a predicted frequency domain range in which interference exists, so as to indicate the predicted frequency domain range in which interference exists.

In some other possible implementations, alternatively, a time domain range in a time-frequency range of the second signal may include a predicted time domain range in which interference exists, so as to indicate the predicted time domain range in which interference exists.

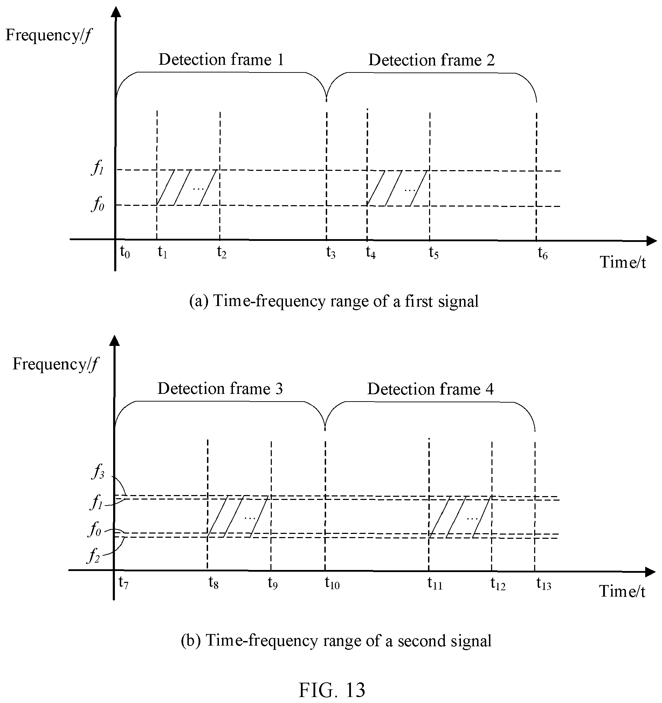

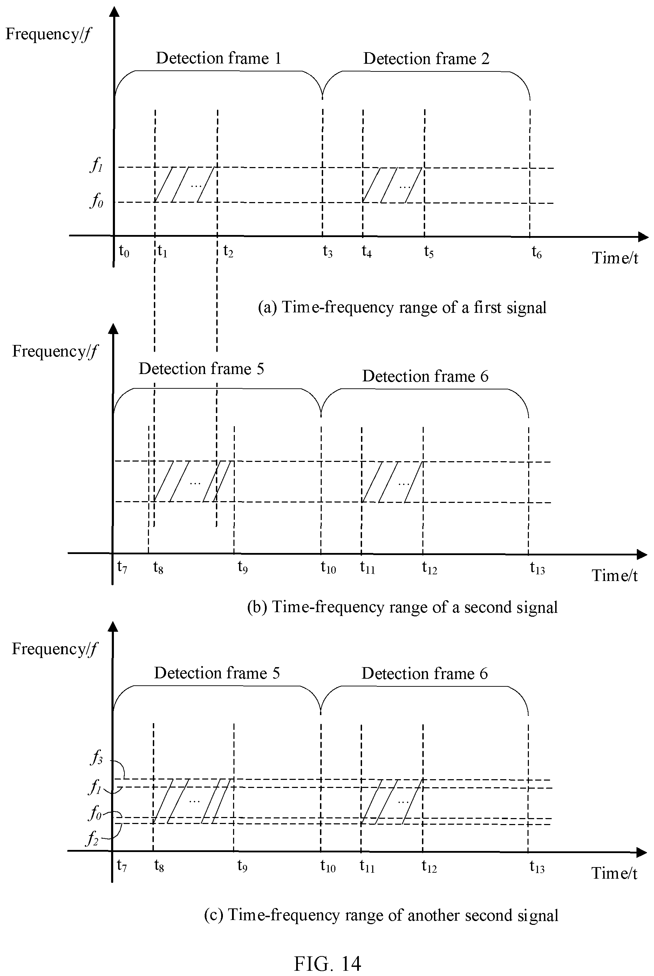

Optionally, the time-frequency range of the second signal may include a time domain range and/or frequency domain range of some or all of the at least one signal. For example, the at least one signal includes the first signal corresponding to the first direction. In this case, time-frequency ranges of the first signal and the second signal may meet at least one of the following two cases:
Case 1: A frequency domain range of the first signal is a subset of a frequency domain range of the second signal. For example, FIG. 13 is a possible schematic diagram of the time-frequency ranges of the first signal and the second signal according to an embodiment of this application. Referring to (a) in FIG. 13, the frequency domain range of the first signal is (f₀, f₁). Referring to (b) in FIG. 13, the frequency domain range of the second signal is (f₂, f₃). It can be learned that the frequency domain range of the first signal is a subset of the frequency domain range of the second signal.
Case 2: A time domain range of the first signal is a subset of a time domain range of the second signal. For example, FIG. 14 is a possible schematic diagram of the time-frequency range of the first signal and the time-frequency range of the second signal according to an embodiment of this application. Referring to (a) in FIG. 14, a period of the first signal may be represented as (t3-t0), an offset of the first signal may be represented as (t1-t0), and duration of the first signal is (t2-t1). Referring to (b) in FIG. 14, a period of the second signal may be represented as (t10-t7), which is equal to the period (t3-t0) of the first signal; an offset of the second signal may be represented as (t8-t0), which is less than (or may be equal to) the offset (t1-t0) of the first signal; and duration of the second signal is (t9-t8), which is greater than (or may be equal to) the duration (t2-t1) of the first signal. It can be learned that the time domain range of the first signal is a subset of the time domain range of the second signal.

Optionally, the foregoing case 1 and case 2 may be met at the same time. For example, referring to (c) in FIG. 14, it can be learned that, when the time domain range of the first signal is a subset of the time domain range of the second signal, the frequency domain range of the first signal may also be a subset of the frequency domain range of the second signal.

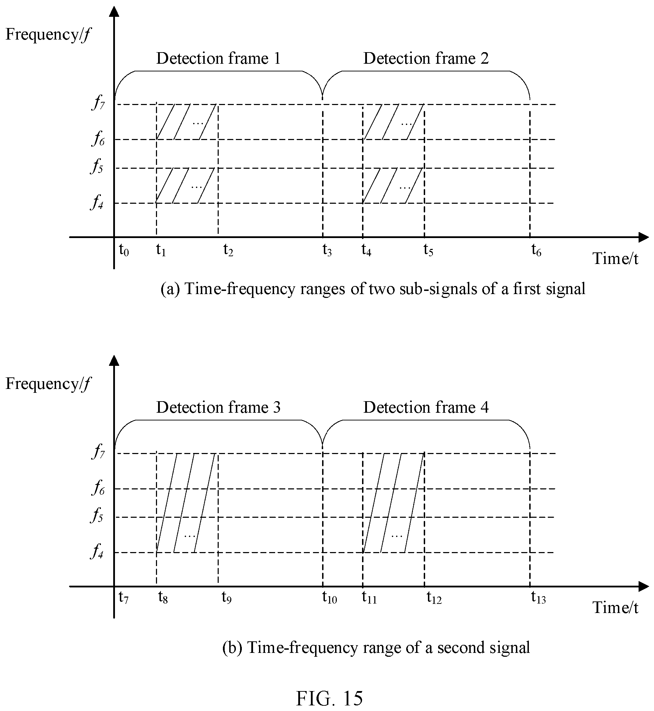

Optionally, the first signal may include a plurality of sub-signals, and the predicted interference time-frequency range may be specifically obtained based on a time-frequency range corresponding to N sub-signals in the first signal. For example, the frequency domain range that is indicated by the second signal and in which interference exists may specifically include a frequency domain range corresponding to N sub-signals in the first signal, where N is greater than or equal to 1. For example, N is 2. FIG. 15 is a possible schematic diagram of time-frequency ranges of the sub-signal and the second signal according to an embodiment of this application. Frequency bands of the two sub-signals in the first signal are (f₄, f₅) and (f₆, f₇), and a frequency range of the transmitted second signal may be (f₄, f₇), where (f₄, f₇) includes the two frequency domain ranges (f₄, f₅) and (f₆, f₇). It can be understood that only an example in which the frequency domain ranges corresponding to the two sub-signals do not overlap is used herein. This application is also applicable to a case in which frequency domain ranges corresponding to the N sub-signals overlap.

Further, optionally, the N sub-signals may be sub-signals whose signal strength ranks in the top N in the first signal. It can be understood that a signal with higher signal strength may cause more severe interference. Therefore, the first detection apparatus obtains, based on the sub-signal whose signal strength ranks in the top N, the predicted interference time-frequency range from the signal obtained through listening in the first direction, and indicates the predicted interference time-frequency range by using the second signal, so as to more accurately indicate the range in which interference may exist. N may be preconfigured or predefined by the first node.

Alternatively, the N sub-signals may be sub-signals whose signal strength exceeds a first threshold signal in the first signal. In a possible case, interference may be caused to a real echo signal only when signal strength exceeds the first threshold. Therefore, the first detection apparatus may predefine the first threshold or preconfigure the first threshold, obtain the predicted interference time-frequency range based on the N sub-signals whose signal strength exceeds the first threshold in the signal corresponding to the first direction, and indicate the predicted interference time-frequency range by using the second signal, so as to more effectively indicate the range in which interference exists.

Alternatively, the N sub-signals may be sub-signals whose signal strength exceeds a first threshold and ranks in the top N in the first signal. It can be understood that, if there are a comparatively large quantity of sub-signals whose signal strength exceeds the first threshold, the first detection apparatus may obtain the predicted interference time-frequency range based on the sub-signal whose signal strength exceeds the first threshold and ranks in the top N, and indicate the predicted interference time-frequency range by using the second signal, so as to more effectively indicate the range in which interference exists.

It should be noted that a frequency domain range is used as an example herein to describe a case in which the second signal includes the frequency domain range of the N sub-signals. In a time domain range, the second signal may also include a time domain range of the N sub-signals. Further, the time-frequency range of the second signal may include the time-frequency range of the N sub-signals. Examples are not listed one by one herein.

Optionally, there are a plurality of implementations in which the first node transmits the second signal toward the second direction. In this application, the following three implementations are used as examples for description.

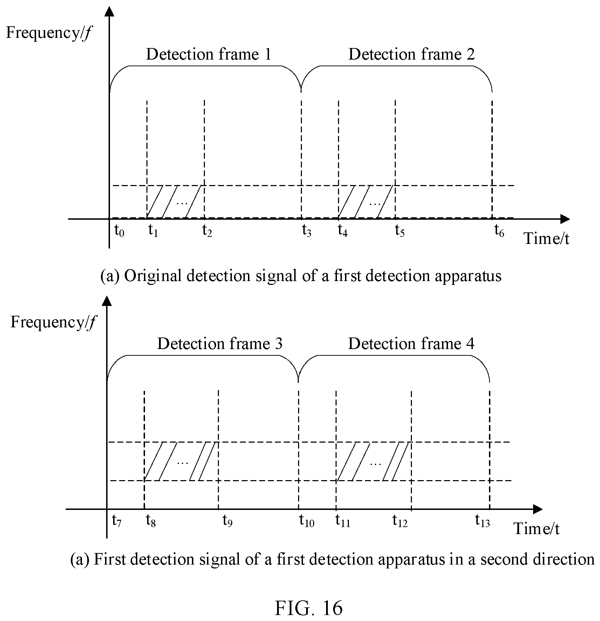

Implementation 1: The first detection apparatus transmits the second signal in the detection time of the detection frame, where the second signal belongs to the first detection signal of the first detection apparatus. FIG. 16 is a schematic diagram of a signal transmitted by the first detection apparatus toward the second direction according to an embodiment of this application. In addition, (a) in FIG. 16 is an example of a schematic diagram of an original detection signal of the first detection apparatus in the second direction, where t0 to t3 may be considered as a period of one detection frame of the first detection apparatus, t1 to t2 is the detection time, t0 to t1 and t2 to t3 are idle times, and the first detection apparatus may transmit the first detection signal, receive an echo signal, and the like in the detection time. After listening for the at least one signal corresponding to the at least one direction, the first detection apparatus may configure a time domain range and/or frequency domain range of the first detection signal transmitted by the first detection apparatus toward the second direction as a time domain range and/or frequency domain range in the time-frequency range that is predicted by the first detection apparatus and in which interference may exist. For example, (b) in FIG. 16 is a schematic diagram of a new first detection signal of the first detection apparatus in the second direction. It can be learned that, in a detection time between t8 and t9, the first detection apparatus may transmit the second signal, where the second signal indicates, to a terminal, a detection apparatus, or the like located in the second direction, the time-frequency range in which interference may exist.

It can be understood that the second signal is the first detection signal of the first detection apparatus, and the first detection apparatus may receive an echo signal corresponding to the second signal, and obtain a detection result of the first detection apparatus in the second direction by processing the echo signal. In addition, the second signal indicates, to the second direction, the time-frequency range in which interference may exist, so that a terminal, a detection apparatus, or the like located in the second direction avoids, as far as possible based on the second signal, the time domain range and/or frequency domain range in which interference may exist.

For the implementation 1, it should be further noted that, if the second signal is used to indicate the frequency domain range in the predicted interference time-frequency range, the frequency domain range in the predicted interference time-frequency range is within the operating bandwidth of the first detection apparatus. If the second signal is used to indicate the time domain range in the predicted interference time-frequency range, time domain information such as a period, a detection time, and an idle time of the first detection apparatus may be adjusted.

It can be understood that the predicted interference time-frequency range may change with time, and before next adjustment of the first detection signal, the first detection apparatus may keep using the current time-frequency range for detection. Alternatively, the first detection apparatus may configure the time-frequency range of the first detection signal as an original time-frequency range when no interference time-frequency range is predicted. The original time-frequency range herein may be a specified time-frequency range, or a time-frequency range used before previous configuration. When the original time-frequency range is used, target detection by the first detection apparatus may achieve a better detection effect. For example, the receive end of the first detection apparatus has comparatively high sensitivity to a signal in a specific frequency domain range. Therefore, the time-frequency range is adjusted to the original time-frequency range when no interference time-frequency range is predicted, so that the first detection apparatus can achieve a better detection effect.

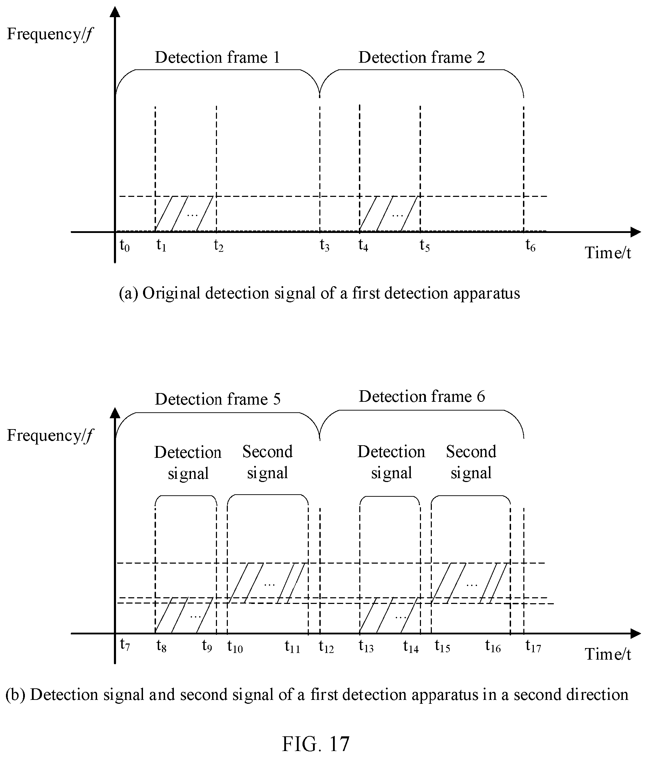

Implementation 2: The first detection apparatus transmits the detection signal in the detection time of the detection frame, and transmits the second signal in the idle time of the detection frame. FIG. 17 is a schematic diagram of a signal transmitted by the first detection apparatus toward the second direction according to an embodiment of this application. In addition, (a) in FIG. 17 is an example of a schematic diagram of an original first detection signal of the first detection apparatus (for specific descriptions, refer to the descriptions of (a) in FIG. 16). Referring to (b) in FIG. 17, the first detection apparatus may transmit the first detection signal in the detection time (for example, t8-t9 and t13-t14), and transmit the second signal in duration of the idle time (for example, t10-t11 and t15-t16). In other words, the first detection apparatus transmits the first detection signal in the detection time, to perform a target detection task according to an original detection rule; and the first detection apparatus transmits the second signal toward the second direction in the idle time, to indicate the time-frequency range in which interference exists, so that a terminal, a detection apparatus, or the like located in the second direction avoids, as far as possible based on the second signal, the time domain range and/or frequency domain range in which interference may exist.

It can be understood that, when the second signal indicates the frequency domain range in which interference exists, and the frequency domain range of the second signal is different from a frequency domain range of the detection signal, the first detection apparatus may adjust the time domain range of the second signal, so that the second signal does not affect transmission of the original detection signal. Another specific case may further depend on specific implementation of the radar. According to such a specific implementation solution, the second signal can indicate, to the second direction without affecting the original detection signal, the time-frequency range in which interference may exist.

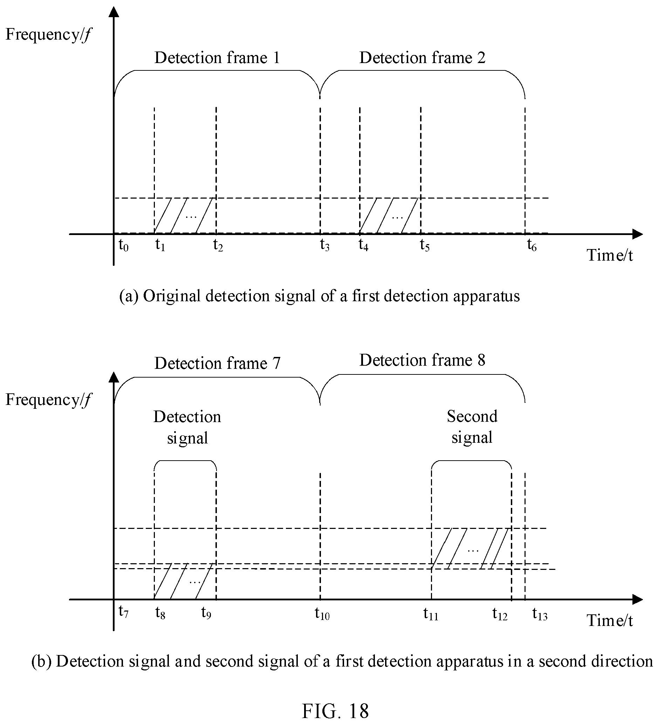

Implementation 3: The detection frame includes a first detection frame and a second detection frame. The first detection apparatus transmits the detection signal in a detection time of the first detection frame, and transmits the second signal in a detection time of the second detection frame. FIG. 18 is a schematic diagram of a signal transmitted by the first detection apparatus according to an embodiment of this application. In addition, (a) in FIG. 18 is an example of a schematic diagram of an original first detection signal of the first detection apparatus (for specific descriptions, refer to the descriptions of (a) in FIG. 16). Referring to (b) in FIG. 18, the first detection apparatus may transmit the detection signal toward the second direction in a detection time (for example, t8-t9) of a detection frame 7 (that is, the foregoing first detection frame), and transmit the second signal toward the second direction (for example, in a time segment t11-t12) in a detection frame 8 (the foregoing second detection frame).

In other words, the first detection apparatus may select some of detection frames for transmitting the second signal, to indicate, to the second direction, the time domain range and/or frequency domain range in which interference exists. It can be understood that the first detection frame and the second detection frame may be alternately arranged, or may be arranged in another form (for example, the second detection frame is subsequent to two first detection frames).

Optionally, the foregoing three implementations described as examples are not only applicable to a first detection apparatus with only one transmit end, but also applicable to a first detection apparatus with a plurality of transmit ends. For example, when the first detection apparatus has two signal transmit ends (referred to as a first transmit end and a second transmit end for ease of description), and the implementation 2 is used as an example, the first transmit end of the first detection apparatus may be configured to transmit the detection signal in the detection time, and the second transmit end of the first detection apparatus may be configured to transmit the second signal in the idle time of the detection frame. Other possible implementations are not described one by one.

In a possible design, because a detection signal of the first detection apparatus in the first direction may also cause interference, the first detection apparatus may further indicate, by using the second signal, a time domain range and/or frequency domain range of the detection signal in the first direction.

Optionally, the first detection apparatus may be deployed at an intersection, and the second direction may be specifically a second road direction of the intersection. The second road direction may specifically include a plurality of lanes, where the lane may be a driving road between two lane lines. Optionally, the plurality of lanes in the second road direction include a first lane that allows turning toward the first road direction.

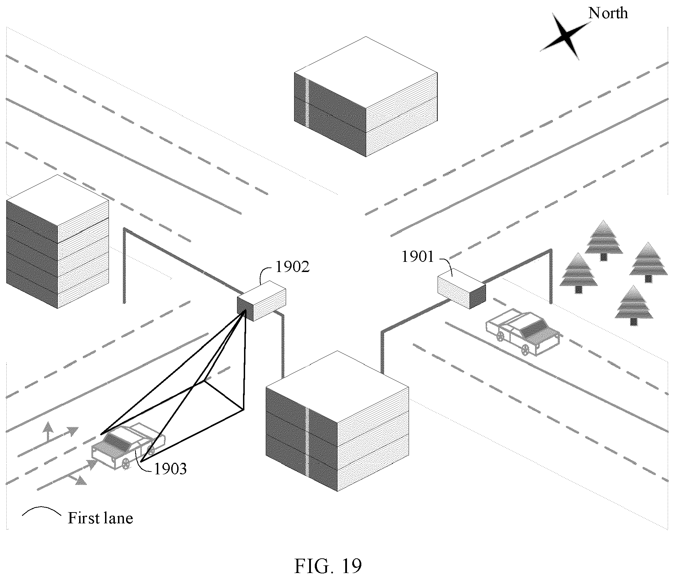

In a possible design, the first detection apparatus may transmit the second signal to the first lane in the second road direction, so that a vehicle on the first lane avoids the time-frequency range in which interference may exist. For example, the first detection apparatus may support a beamforming technology, and therefore can directionally perform radar signal transmission, so that the second signal can be directionally transmitted to the first lane. Specifically, FIG. 19 is a schematic diagram of a possible scenario of transmitting the second signal according to an embodiment of this application. A radar 1901 and a radar 1902 may constitute an intersection radar system (the radar 1901 and the radar 1902 may exchange information with each other). The radar 1902 may receive a first signal corresponding to an east road direction, predict an interference time-frequency range based on the first signal, and transmit a second signal to a first lane by using a beamforming technology, where the second signal may indicate the predicted interference time-frequency range. In this way, because a vehicle on the first lane may turn to an east road, the vehicle (or specifically, a vehicle-mounted radar) on the first lane obtains, by listening for the second signal, a time domain range and/or frequency domain range in which interference exists, so as to avoid, as far as possible, the time domain range and/or frequency domain range in which interference exists, thereby improving radar detection precision and target detection accuracy of the vehicle. In addition, as the radar 1902 directionally transmits a radar signal to a lane, interference to a radar located in another direction is also avoided.

Optionally, the at least one signal may further include a third signal corresponding to a third direction. In this case, a time domain of the second signal and a time-frequency range of the third signal further meet at least one of the following: a frequency domain range of the third signal is a subset of the frequency domain range of the second signal; or a time domain range of the third signal is a subset of the time domain range of the second signal. For specific descriptions, refer to corresponding cases in the foregoing case 1 and case 2.

Further, optionally, the first detection apparatus may listen for signals corresponding to a plurality of directions, obtain predicted interference time-frequency ranges based on the signals corresponding to the plurality of directions, and transmit the second signal (the second signal may include a plurality of segments of signals) toward the second direction in a time division or frequency division manner, where the second signal is used to indicate the predicted interference time-frequency ranges.

For example, Table 1 is a possible listening/transmitting pair according to an embodiment of this application, and is used to indicate a relationship between a road direction for listening for the first signal and a road direction for transmitting the second signal. A T-junction is used as an example (for details, refer to the T-junction shown in FIG. 9). "Listen east and transmit south" means that a radar may listen for a first signal corresponding to an east direction, obtain a predicted east-direction interference time-frequency range based on the first signal, and then transmit a second signal toward a south direction, where the second signal is used to indicate the predicted east-direction interference time-frequency range. In this way, a second detection apparatus (for example, a vehicle-mounted radar) located in the south direction can obtain, through listening, a time domain range and/or frequency domain range in which interference exists in the east road direction, so as to avoid the time domain range and/or frequency domain range. Similarly, "listen west and transmit south" means that a radar may listen for a third signal corresponding to a west direction, obtain a predicted interference time-frequency range based on the third signal, and then transmit a second signal toward a south road direction, where the second signal is used to indicate the predicted interference time-frequency range. Other listening/transmitting pairs may be deduced by analogy, and details are not described herein.

**Table 1 Listening/Transmitting pairs at a T-junction**

| Listening/Transmitting pair | | Road direction for transmitting the second signal | | |
|---|---|---|---|---|
| | | East | South | West |
| Road direction for obtaining the first signal through listening | East | \ | Listen east and transmit south | Listen east and transmit west |
| | South | Listen south and transmit east | \ | Listen south and transmit west |
| | West | Listen west and transmit east | Listen west and transmit south | \ |

It can be understood that a T-junction has a total of three directions. Therefore, the second signal transmitted toward the second direction may be based on listening results corresponding to the first direction and the third direction. For example, this application describes the following case as an example: In a combination of "listen east and transmit south" and "listen west and transmit south", when the first detection apparatus obtains, respectively through listening in the east direction and the west direction, different time domain ranges or frequency domain ranges in which interference exists, and the first detection apparatus may transmit the second signal toward the south direction, the second signal may be used to indicate the time domain ranges or frequency domain ranges in which interference exists. When there are a plurality of time domain ranges or frequency domain ranges, the second signal may be transmitted in a frequency division or time division manner.

Alternatively, the first detection apparatus may separately listen for signals corresponding to different directions, and then separately indicate predicted interference time-frequency ranges to the second direction by using different signals. For example, the first detection apparatus may further listen for a fourth signal corresponding to a fourth direction. In this case, the first detection apparatus may transmit a fifth signal toward the second direction, where the fifth signal is used to indicate a predicted interference time-frequency range corresponding to the fourth direction. A time-frequency range of the fourth signal and a time-frequency range corresponding to the fourth direction meet at least one of the following: a frequency domain range of the fourth signal is a subset of a frequency domain range of the fifth signal; or a time domain range of the fourth signal is a subset of a time domain range of the fifth signal. For specific descriptions, refer to corresponding cases in the foregoing case 1 and case 2. In other words, the first detection apparatus may separately transmit the second signal and the fifth signal in a time division or frequency division manner, to respectively indicate, to the second direction, time domain ranges or frequency domain ranges in which interference exists in the at least one direction and the fourth direction.

Further, optionally, the first detection apparatus may determine M (M is greater than or equal to 1) sub-signals in at least one signal corresponding to a plurality of directions, obtain a predicted interference time-frequency range based on the M sub-signals, and transmit the second signal and the fifth signal toward the second direction, where the second signal and the fifth signal are used to indicate the predicted interference time-frequency range. The M signals may be signals whose signal strength ranks in the top M, or M signals whose signal strength exceeds a second threshold, or signals whose signal strength exceeds a second threshold and ranks in the top M.

In a possible design, when the first detection apparatus senses signals corresponding to a plurality of directions, the first detection apparatus may determine, based on turn light information or driving intention information of a vehicle, a direction toward which the vehicle needs to travel, and further determine an interference time-frequency range corresponding to the direction. For example, the first detection apparatus may determine the driving intention information of the vehicle by using a camera, a monitoring probe, or a vehicle to everything (vehicle to everything, V2X) technology. If the first detection apparatus determines, based on the driving intention information of the vehicle, that the vehicle needs to turn to drive in the first direction, the first detection apparatus transmits the second signal toward the second direction in which the vehicle is located, to indicate a time domain range or frequency domain range in which interference may exist in the first direction. Alternatively, the vehicle herein may be replaced with an intelligent terminal or a transportation vehicle such as an unmanned aerial vehicle, a robot, or a ship.

Optionally, the detection method shown in FIG. 10 may further include step S1003 and step S1004. The "optionally" herein may be understood as follows: In an actual implementation scenario, there may be no second detection apparatus in the second direction, but this does not affect transmitting the second signal toward the second direction by the first detection apparatus. Step S1003 and step S1004 are specifically as follows.

Step S1003: The second detection apparatus receives the second signal.

Specifically, the second detection apparatus may be a radar or a ranging apparatus, for example, may be at least one of a millimeter-wave radar, an ultrasonic radar, a laser radar, an infrared detector, and another ranging apparatus. The second detection apparatus may be installed in a vehicle, an unmanned aerial vehicle, a ship, or a train.

The second signal is a signal transmitted by the first detection apparatus. The second detection apparatus may be, for example, a detection apparatus located in the second direction of the first detection apparatus. The first detection apparatus transmits the second signal toward the second direction. Therefore, the second detection apparatus may receive the signal transmitted by the first detection apparatus.

Optionally, the first detection apparatus is an intersection radar at the intersection, and the second detection apparatus is located in the second road direction of the intersection. Further, the second detection apparatus is located on the first lane that allows driving toward the first road direction.

Step S1004: The second detection apparatus transmits a second detection signal for target detection.

Specifically, for ease of description, a detection signal of the second detection apparatus is referred to as the second detection signal in this embodiment of this application. The second detection signal transmitted by the second detection apparatus can avoid, as far as possible, the time domain range or frequency domain range in the interference time-frequency range indicated by the second signal, so that interference is reduced.

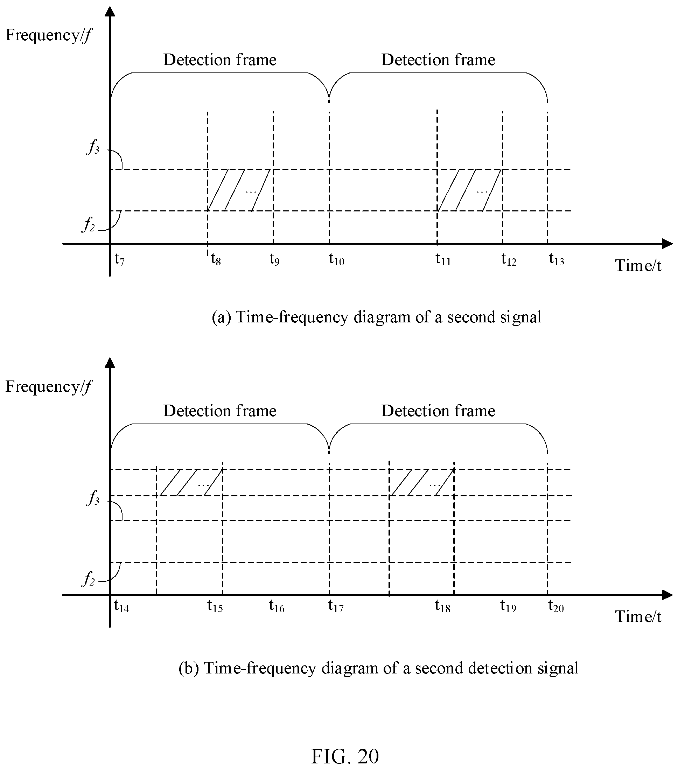

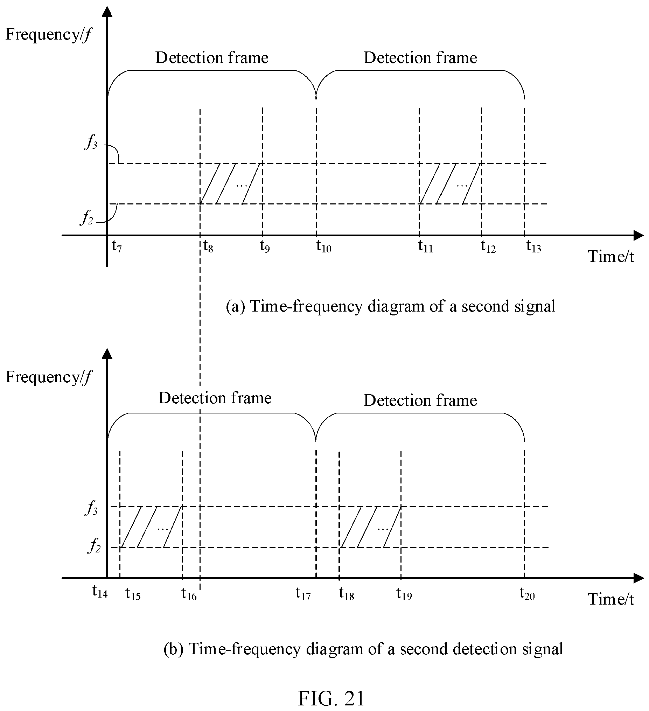

Optionally, generally, a time-frequency range of the second detection signal and the time-frequency range of the second signal may meet at least one of the following two cases:
Case 1: A frequency domain range of the second detection signal is different from the frequency domain range of the second signal. For example, FIG. 20 is a time-frequency diagram of the second signal and the second detection signal according to an embodiment of this application. Referring to (a) in FIG. 20, the frequency domain range of the second signal is (f₂, f₃). If the second detection apparatus performs target detection by using a frequency band indicated by the frequency domain range, the target detection may be subject to interference. Therefore, the second detection apparatus may avoid the frequency domain range of the second signal as far as possible. Referring to (b) in FIG. 20, the frequency domain range of the second detection signal is different from a first frequency domain range, so that signal interference can be avoided. For example, during subsequent processing, a signal whose frequency domain range is different from that of the second detection signal may be removed, so as to filter out an interference signal.
Case 2: A time domain range of the second detection signal is different from the time domain range of the second signal. For example, FIG. 21 is a time-frequency diagram of the second signal and the second detection signal according to an embodiment of this application. Referring to (a) in FIG. 21, a period of the second signal may be represented as (t10-t7), an offset of the second signal may be represented as (t8-t0), and duration of the second signal is (t9-t8). Referring to (b) in FIG. 21, a sum of an offset and duration of the second detection signal is less than the offset of the second signal, that is, the time domain range of the second detection signal and the time domain range of the second signal do not overlap in any frame period. It can be understood that, in a detection period of one detection frame, the first detection apparatus starts to transmit the second signal only after one detection time of the second detection apparatus ends. Because the second signal indicates the predicted interference time-frequency range, the second detection apparatus avoids a time domain range of an interference signal, thereby reducing a possibility of receiving the interference signal. This improves accuracy of a detection result of the second detection apparatus. Optionally, the foregoing case 1 and case 2 may be met at the same time. It can be understood that, if the second signal indicates the time domain range in which interference exists, the second detection apparatus avoids, when transmitting the second detection signal, the time domain range in which interference exists; if the interference signal indicates the frequency domain range in which interference exists, the second detection apparatus avoids, when transmitting the second detection signal, the frequency domain range in which interference exists; or if the interference signal indicates the time domain range and frequency domain range in which interference exists, the second detection apparatus avoids, when transmitting the second detection signal, the time domain range and/or frequency domain range in which interference exists.

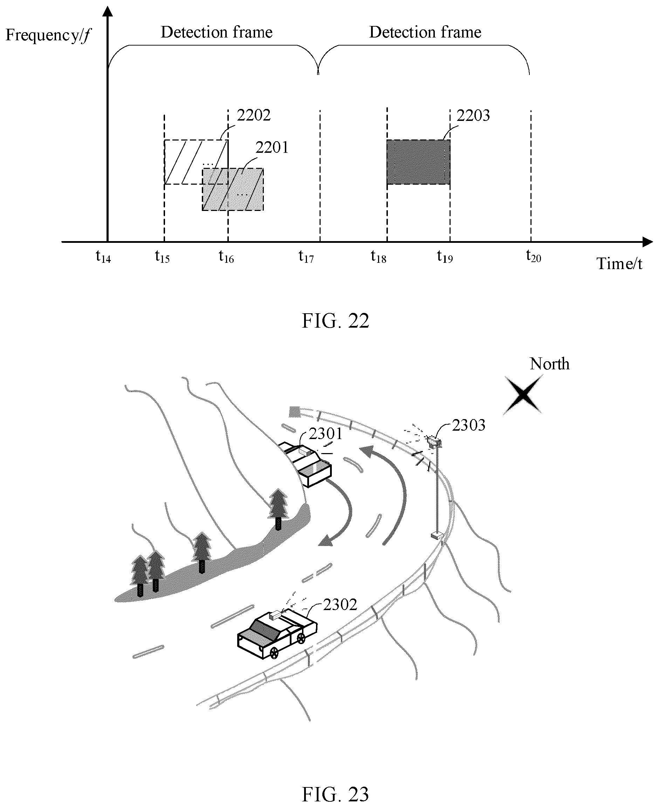

It should be noted that "ranges are different" herein means that the ranges are not completely the same. Generally, the time-frequency range of the second detection signal does not overlap the time-frequency range of the second signal. However, the time-frequency range of the second detection signal may alternatively overlap the time-frequency range of the second signal. When there is overlapping, the second detection apparatus may subsequently attempt to remove the interference signal in a manner such as low-pass filtering. For example, FIG. 22 is a possible schematic diagram of time-frequency ranges of the second detection signal and the interference signal according to an embodiment of this application. An area 2201 is used to represent the time-frequency range of the second signal, and an area 2202 (and an area 2203) represents the time-frequency range of the second detection signal. Although the signals overlap in the time-frequency ranges, parsed signals do not intersect, and therefore, when the second detection apparatus receives the interference signal whose time-frequency range overlaps that of the signal of the second detection apparatus, the second detection apparatus may attempt to remove the interference signal in a manner such as low-pass filtering for an overlapped part.

It can be understood that, if the time domain range indicated by the second signal is avoided when the second detection apparatus transmits the second detection signal, a time domain range of the detection signal of the second detection apparatus can be different from the time domain range of an interference signal, so that the interference time domain range can be avoided as far as possible, thereby achieving interference avoidance. In another possible design, if the frequency domain range indicated by the second signal is avoided when the detection signal is transmitted, an interference signal in another frequency domain range can be filtered out during processing, thereby achieving interference avoidance.

In the embodiment shown in FIG. 10, the first detection apparatus listens for the signal corresponding to the one or more directions, and transmits the second signal toward the second direction, where the second signal is used to indicate, to the second direction, the time domain range or frequency domain range in which interference may exist. Therefore, the second detection apparatus (for example, the vehicle-mounted radar) located in the second direction can obtain, by listening for the second signal, the time-frequency range in which interference exists. This improves listening quality of the second detection apparatus. Further, the second detection apparatus may adjust the time domain range (or the frequency domain range) of the detection signal of the second detection apparatus, to avoid, as far as possible, the time domain range (or the frequency domain range) in which interference exists, thereby avoiding interference from another signal to the detection signal of the second detection apparatus. This improves accuracy of target detection by the second detection apparatus.

This embodiment of this application may be applied to an intersection radar, and may be considered as forwarding, by the intersection radar in a form of the second signal, a predicted interference time domain range and/or frequency domain range of one or more road directions (for example, referred to as the first road direction), so that the second detection apparatus (for example, the vehicle-mounted radar) located in another road direction (for example, the second road direction) obtains an interference time-frequency range of a non-line-of-sight area, to avoid cases in which interference suddenly occurs and a quantity of listening opportunities is comparatively small during turning at an intersection. When the second detection apparatus is the vehicle-mounted radar or a vehicle-mounted detection apparatus, target detection accuracy of a vehicle can be improved, thereby improving driving safety.

The following further describes an example of an implementation scenario to which an embodiment of this application may be applied. FIG. 23 is a schematic diagram of a possible application scenario of a detection method according to an embodiment of this application. It can be learned that the intersection is a turn, and includes a west road direction and a south road direction. A vehicle 2301 located in the west road direction is in an NLOS area of a vehicle 2302. Therefore, a second detection apparatus (for example, a vehicle-mounted radar) on the vehicle 2302 cannot sense a signal transmitted by a detection system of the vehicle 2301. An intersection radar 2303 located at the intersection can sense a first signal of the vehicle 2301 located in the west road direction, and transmit a second signal toward the south road direction. The second signal is used to indicate an interference time-frequency range (for example, including a time domain range or frequency domain range of the first signal) on a west road. In this way, the vehicle 2302 located in the south road direction can sense the second signal transmitted by the intersection radar 2301, so as to avoid, as far as possible when transmitting a second detection signal, the interference time-frequency range indicated by the second signal. When the vehicle 2302 and the vehicle 2301 meet each other at the turn, even if the vehicle 2302 receives the first vehicle 2302, because a time-frequency range or frequency domain range of the second detection signal of the vehicle 2302 is different from that of the first signal of the vehicle 2301, the first vehicle can remove an echo in a different time-frequency range or a different frequency domain range during echo signal processing, so that listening quality of the second detection apparatus (for example, the vehicle-mounted radar) of the vehicle 2302 can be improved. In this way, interference from another signal to the detection signal of the vehicle is avoided, and driving safety of the vehicle is improved.

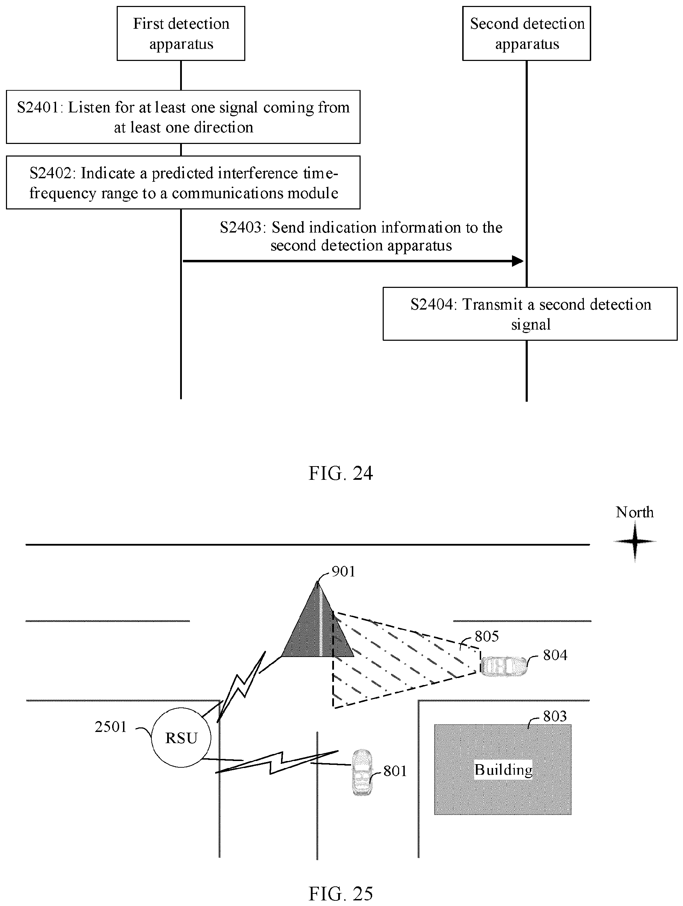

FIG. 24 is a schematic flowchart of another detection method according to an embodiment of this application. Optionally, the method may be implemented based on the detection system shown in FIG. 9, or may be implemented based on components in the FMCW radar shown in FIG. 5, or certainly may be implemented based on components in another radar system (for example, a pulse radar). The detection method includes at least the following steps.

Step S2401: A first detection apparatus listens for at least one signal coming from at least one direction.

For specific descriptions, refer to the detailed descriptions in step S701. Details are not described herein again.

Step S2402: The first detection apparatus indicates a predicted interference time-frequency range to a communications module.

The interference time-frequency range may be understood as a time-frequency range in which interference exists. Optionally, the interference time-frequency range may be obtained based on at least one signal.

For example, the first detection apparatus may use a time domain range and/or frequency domain range of the at least one signal as the interference time-frequency range.

For another example, the first detection apparatus may use a frequency domain range that is in a frequency domain range of the at least one signal and that belongs to operating bandwidth of the first detection apparatus, as a frequency domain range in which interference exists.

Further, optionally, the first detection apparatus listens for at least one signal corresponding to at least one direction, and obtains time domain information and/or frequency domain information of the at least one signal. Further, the first detection apparatus may predict, based on the obtained time domain information, a time domain range in which interference exists, and/or predict, based on the obtained frequency domain information, a frequency domain range in which interference exists.

The frequency domain information includes an initial frequency, a highest frequency, and the like of the at least one signal. The time domain information includes at least one of a period, an offset, and duration. For details, refer to the foregoing detailed descriptions of FIG. 4. In some possible scenarios, one or more of the period, the duration, or the offset may be preset, or may comply with a standard definition, or may be obtained through detection based on the signal.

Optionally, the interference time-frequency range may include a time domain range and/or frequency domain range of some or all of the at least one signal. A possible case is described herein as an example. The interference time-frequency range corresponds to a first frequency domain range and a first time domain range. For example, the at least one signal includes a first signal corresponding to a first direction. The interference time-frequency range and a time-frequency range of the first signal meet at least one of the following two cases:
Case 1: A frequency domain range of the first signal is a subset of the first frequency domain range.
Case 2: A time domain range of the first signal is a subset of the first time domain range.

Optionally, the foregoing case 1 and case 2 may be met at the same time. For example, when the time domain range of the first signal is a subset of the first time domain range, the frequency domain range of the first signal is also a subset of the first frequency domain range. For specific descriptions, refer to the descriptions of the time-frequency range of the second signal and the time-frequency range of the first signal in step S1002. Details are not described herein again.

Further, optionally, the first signal corresponding to the first direction may include a plurality of sub-signals, and the predicted interference time-frequency range may be specifically obtained based on a time-frequency range corresponding to N sub-signals in the first signal. The N sub-signals may be sub-signals whose signal strength ranks in the top N in the first signal, or the N sub-signals may be sub-signals whose signal strength exceeds a first threshold signal in the first signal, or the N sub-signals may be sub-signals whose signal strength exceeds a first threshold and ranks in the top N in the first signal. For details, refer to related descriptions in step S1002.

Optionally, the predicted interference time-frequency range may be alternatively obtained based on listening results corresponding to a plurality of directions. For example, the first detection apparatus may determine M (M is greater than or equal to 1) sub-signals in at least one signal corresponding to the plurality of directions, and obtain the predicted interference time-frequency range based on the M sub-signals. The M signals may be signals whose signal strength ranks in the top M, or M signals whose signal strength exceeds a second threshold, or signals whose signal strength exceeds a second threshold and ranks in the top M.

The "indication" herein may be specifically sent by using a communications link such as a wired link and/or a wireless link, or may be sent by using a bus, a data line, or the like. The first detection apparatus may directly indicate the interference time-frequency range, or may indicate the interference time-frequency range by using other information. Two possible implementations are described herein as examples:
Implementation 1: The first detection apparatus sends the interference time-frequency range to the communications module, and correspondingly, the communications module receives the interference time-frequency range.
Implementation 2: The first detection apparatus sends frequency domain information or time domain information of the at least one signal to the communications module, and correspondingly, the communications module may obtain the interference time-frequency range based on the frequency domain information or time domain information of the at least one signal.

It should be noted that the communications module may be a module with a data receiving and sending capability. The communications module may perform data transmission with the first detection apparatus. Further, the communications module may further perform data transmission with a second detection apparatus (for example, a vehicle-mounted radar) located in a second direction. Therefore, the first detection apparatus indicates the predicted interference time-frequency range to the communications module, and the communications module may further send the interference time-frequency range to the second detection apparatus located in the second direction, so that the second detection apparatus avoids the time-frequency range in which interference may exist.

Optionally, the module may be integrated into the first detection apparatus (for example, an integrated detection and communication radar), or may be an external communications apparatus. For example, the communications module may be a roadside unit (roadside unit, RSU), a roadside base station, a vehicle to everything (vehicle to everything, V2X) module, or the like.

For example, FIG. 25 is a schematic diagram of a possible operation scenario of a detection method according to an embodiment of this application. It can be learned that an RSU 2501 supports communication with a first detection apparatus, and a communications link thereof may be a wired link (for example, a system bus, an optical fiber, a twisted pair, or another line that supports data transmission), or may be a wireless link. Further, the RSU may communicate (for example, communicate by using V2X) with another vehicle at an intersection. Generally, communication between an RSU and a vehicle is usually wireless. The first detection apparatus 901 may listen for a radar signal transmitted by a radar in a vehicle 804 located in an east direction, and analyze time domain information and/or frequency domain information of the radar signal to obtain a predicted interference time-frequency range. The first detection apparatus 901 sends the predicted interference time-frequency range to the RSU 2501, and correspondingly, the RSU 2501 may receive the interference time-frequency range indicated by the first detection apparatus. Then, the RSU 2501 may send indication information to a vehicle 801, where the indication information indicates, to the vehicle, the time-frequency range in which interference may exist in the east direction. It can be understood that an example in which the communications module is an RSU is used herein for description. The communications module may be alternatively implemented by a roadside base station or the like, or may be integrated into the first detection apparatus 901. A location of the communications module is not limited in this application. It should be noted that the application scenario, the direction, and the like herein are examples, and the method is also applicable to other application scenarios and other directions.

Optionally, the detection method shown in FIG. 24 may further include step S2403 and step S2404. The "optionally" herein may be understood as follows: In an actual implementation scenario, there may be no second detection apparatus in some time segments, but this does not affect indicating the interference time-frequency range to the communications module by the first detection apparatus. S2403 and step S2404 are specifically as follows.

Step S2403: The second detection apparatus receives indication information sent by the first detection apparatus. The indication information indicates the interference time-frequency range predicted by the first detection apparatus.

Specifically, the indication information may be the interference time-frequency range predicted by the first detection apparatus. The indication information may alternatively be time domain information and/or frequency domain information obtained by the first detection apparatus, and the second detection apparatus may obtain the interference time-frequency range based on the time domain information and/or the frequency domain information.

Optionally, the second detection apparatus may receive the indication information from the first detection apparatus forwarded by the communications module.

Optionally, the first detection apparatus is an intersection radar at an intersection, and the second detection apparatus is located in a second road direction of the intersection. Further, the second detection apparatus is located on a first lane that allows driving toward a first road direction.

Step S2404: The second detection apparatus transmits a second detection signal.

Specifically, for ease of description, a detection signal of the second detection apparatus is referred to as the second detection signal in this embodiment of this application. The second detection signal transmitted by the second detection apparatus can avoid the interference time-frequency range as far as possible, thereby reducing interference.

In a possible design, the interference time-frequency range specifically corresponds to a first time domain range and a first frequency domain range. A time-frequency range of the second detection signal and the interference time-frequency range may meet at least one of the following two cases:
Case 1: A frequency domain range of the second detection signal is different from the first frequency domain range. For details, refer to related descriptions of the time-frequency diagram of the second signal and the second detection signal in FIG. 20.
Case 2: A time domain range of the second detection signal is different from the first time domain range. For details, refer to related descriptions of the time-frequency diagram of the second signal and the second detection signal in FIG. 21. Optionally, the foregoing case 1 and case 2 may be met at the same time. It can be understood that, if the indication information indicates the time domain range of an interference signal, the second detection apparatus avoids, when transmitting the second detection signal, the time domain range in which interference exists; if the indication information indicates the frequency domain range, the second detection apparatus avoids, when transmitting the second detection signal, the frequency domain range in which interference exists; or if the indication information indicates the time-frequency range, the second detection apparatus avoids, when transmitting the second detection signal, the time domain range and/or frequency domain range of the second signal.

It should be noted that "ranges are different" herein means that the ranges are not completely the same. Generally, the time-frequency range of the second detection signal does not overlap the interference time-frequency range. However, the time-frequency range of the second detection signal may alternatively overlap the interference time-frequency range. When there is overlapping, the second detection apparatus may subsequently attempt to remove the interference signal in a manner such as low-pass filtering.

It can be understood that, if the time domain range in the interference time-frequency range is avoided when the first detection apparatus transmits the second detection signal, the time domain range of the detection signal of the second detection apparatus can be different from the time domain range of the interference signal, so that the interference time domain range can be avoided as far as possible, thereby achieving interference avoidance. In another possible design, if the frequency domain range in the interference time-frequency range is avoided when the detection signal is transmitted, an interference signal in another frequency domain range can be filtered out during processing, thereby achieving interference avoidance.

In the embodiment shown in FIG. 24, the first detection apparatus obtains the predicted interference time-frequency range by listening for the signal corresponding to the one or more directions, where the interference time-frequency range may be indicated to the second detection apparatus by using the communications module. In this way, the second detection apparatus (for example, the vehicle-mounted radar) can obtain, by using the indication information, the time-frequency range in which interference may exist. Further, the second detection apparatus may adjust the time domain range (or the frequency domain range) of the detection signal of the second detection apparatus, to avoid the time-frequency range in which interference exists, thereby avoiding interference from another signal to the detection signal of the second detection apparatus. This improves accuracy of target detection by the second detection apparatus.

This embodiment of this application may be applied to an intersection radar, and may be considered as forwarding, by the intersection radar, a predicted interference time domain range and/or frequency domain range of one or more road directions (for example, referred to as the first road direction), so that the second detection apparatus (for example, the vehicle-mounted radar) located in another road direction (for example, the second road direction) obtains an interference time-frequency range of a non-line-of-sight area, to avoid cases in which interference suddenly occurs and a quantity of listening opportunities is comparatively small during turning at an intersection. When the second detection apparatus is the vehicle-mounted radar or a vehicle-mounted detection apparatus, target detection accuracy of a vehicle can be improved, thereby improving driving safety.

The methods in the embodiments of this application are described above in detail, and apparatuses in the embodiments of this application are provided below.

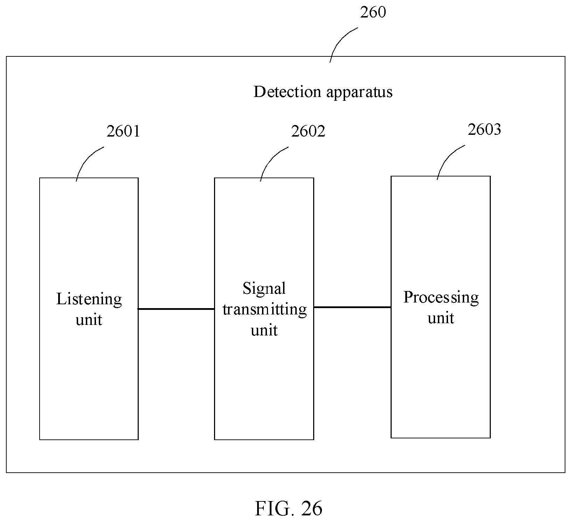

FIG. 26 is a schematic diagram of a structure of a detection apparatus 260 according to an embodiment of this application. The detection apparatus 260 may include a listening unit 2601 and a signal transmitting unit 2602. The detection apparatus 260 is configured to implement the foregoing detection method, for example, may be configured to implement the detection method shown in FIG. 10.

It should be noted that, for implementation of the units, refer to corresponding descriptions in the method embodiment shown in FIG. 10. The detection apparatus 260 may be the first detection apparatus in the embodiment shown in FIG. 10, or one or more modules of the first detection apparatus.

In a possible implementation, the listening unit 2601 is configured to listen for at least one signal coming from at least one direction, where the at least one signal includes a first signal corresponding to a first direction; and
the signal transmitting unit 2602 is configured to transmit a second signal toward a second direction, where the second signal is used to indicate a predicted interference time-frequency range, where
time-frequency ranges of the first signal and the second signal meet at least one of the following:
   a frequency domain range of the first signal is a subset of a frequency domain range of the second signal; or
   a time domain range of the first signal is a subset of a time domain range of the second signal.

In a possible implementation, the detection apparatus 260 further includes a processing unit 2603, configured to obtain time domain information and frequency domain information of the at least one signal, where the time domain information includes at least one of a period, an offset, and duration.

For example, the processing unit 2603 may be specifically a combination of one or more of processing modules such as a frequency mixer, a low-pass filter (low pass filter, LPF), an analog-to-digital converter (analog-to-digital converter, ADC), a digital signal processor (digital signal processor, DSP), a central processing unit (central processing unit, CPU), a graphics processing unit (graphics processing unit, GPU), a microprocessor (microprocessor unit, MPU), an application-specific integrated circuit (Application-Specific Integrated Circuit, ASIC), a field programmable gate array (Field Programmable Gate Array, FPGA), a complex programmable logic device (Complex programmable logic device, CPLD), a coprocessor (assisting a central processing unit in corresponding processing and application), and a micro control unit (Microcontroller Unit, MCU).

In another possible implementation, the first direction is a first road direction of an intersection, the second direction is a second road direction of the intersection, a plurality of lanes in the second road direction include a first lane, and the first lane is a lane that allows driving toward the first road direction.

In another possible implementation, a second detection apparatus exists in the second direction, and the processing unit 2603 is further configured to determine, based on driving intention information of the second detection apparatus, that the second detection apparatus intends to turn toward the first direction.

In another possible implementation, the at least one signal further includes a third signal corresponding to a third direction, and time-frequency ranges of the third signal and the second signal further meet at least one of the following:
a frequency domain range of the third signal is a subset of the frequency domain range of the second signal; or
a time domain range of the third signal is a subset of the time domain range of the second signal.

In another possible implementation, the listening unit 2601 is further configured to listen for a fourth signal coming from a fourth direction.

The signal transmitting unit 2602 is further configured to transmit a fifth signal toward the second direction, where the fifth signal is used to indicate a predicted interference time-frequency range of the fourth direction, and time-frequency ranges of the fourth signal and the fifth signal meet at least one of the following:
a frequency domain range of the fourth signal is a subset of a frequency domain range of the fifth signal; or
a time domain range of the fourth signal is a subset of a time domain range of the fifth signal.

In another possible implementation, the first signal includes at least one sub-signal, the frequency domain range of the second signal includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

In another possible implementation, the second signal is transmitted in a form of a detection frame, the detection frame includes a detection time and an idle time, the detection time of the detection frame is used to transmit a first detection signal for target detection, and the signal transmitting unit 2602 is specifically configured to:
send the second signal in the detection time of the detection frame, where the second signal belongs to the first detection signal; or
send the first detection signal in the detection time of the detection frame, and send the second signal in the idle time of the detection frame; or
send the first detection signal in a detection time of a first detection frame, and send the second signal in a detection time of a second detection frame, where the detection frame includes the first detection frame and the second detection frame.

In another possible implementation, the second signal is transmitted in a form of a detection frame, the detection frame includes a detection time and an idle time, the detection time of the detection frame is used to transmit a first detection signal for target detection, and the listening unit 2601 is specifically configured to listen, in the idle time of the detection frame, for the at least one signal coming from the at least one direction.

It should be understood that, in each apparatus embodiment of this application, division into a plurality of units or modules is merely logical division based on functions, and is not intended to limit a specific apparatus structure. During specific implementation, some of the function modules may be subdivided into more smaller function modules, and some of the function modules may also be combined into one function module. However, regardless of whether these function modules are subdivided or combined, a general procedure performed by the apparatus in a detection process is the same. Usually, each unit corresponds to respective program code (or a program instruction). When the respective program code corresponding to the unit is run on a processor, the unit executes a corresponding procedure under control of the processor, to implement a corresponding function.

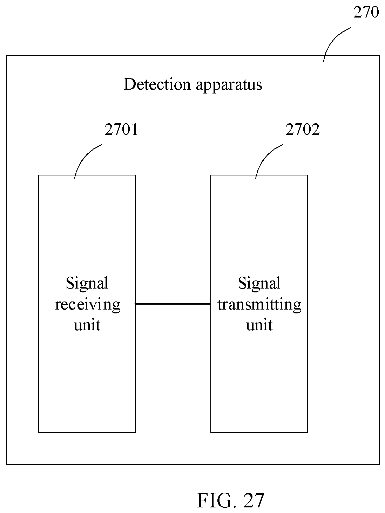

FIG. 27 is a schematic diagram of a structure of a detection apparatus 270 according to an embodiment of this application. The detection apparatus 270 may include a signal receiving unit 2701 and a signal transmitting unit 2702. The detection apparatus 270 is configured to implement the foregoing detection method, for example, may be configured to implement the detection method shown in FIG. 10.

It should be noted that, for implementation of the units, refer to corresponding descriptions in the method embodiment shown in FIG. 10. The detection apparatus 270 may be the second detection apparatus in the embodiment shown in FIG. 10, or one or more modules of the second detection apparatus.

In a possible implementation, the signal receiving unit 2701 is configured to receive a second signal, where the second signal is used to indicate a predicted interference time-frequency range; and
the signal transmitting unit 2702 is configured to transmit a second detection signal for target detection, where a time-frequency range of the second detection signal and a time-frequency range of the second signal meet at least one of the following:
a frequency domain range of the second detection signal is different from a frequency domain range of the second signal; or
a time domain range of the second detection signal is different from a time domain range of the second signal.

In another possible implementation, the second signal comes from an intersection radar at an intersection, and the second signal is used to indicate a predicted interference time-frequency range in a first road direction of the intersection; and
the second detection apparatus is located at a first lane in a second road direction, and the first lane is a lane that allows driving toward the first road direction.

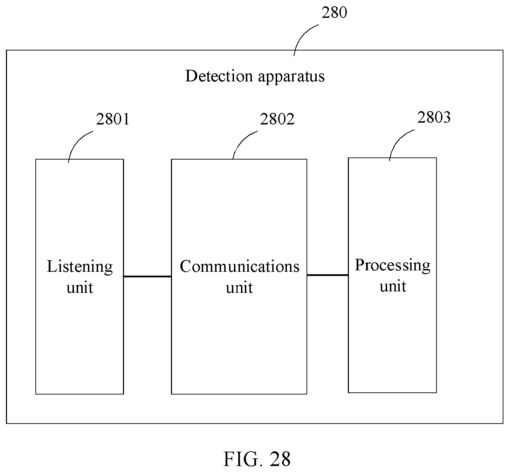

FIG. 28 is a schematic diagram of a structure of a detection apparatus 280 according to an embodiment of this application. The detection apparatus 280 may include a listening unit 2801 and a communications unit 2802. The detection apparatus 280 is configured to implement the foregoing detection method, for example, may be configured to implement the detection method shown in FIG. 24.

It should be noted that, for implementation of the units, refer to corresponding descriptions in the method embodiment shown in FIG. 24. The detection apparatus 280 may be the first detection apparatus in the embodiment shown in FIG. 24, or one or more modules of the first detection apparatus.

In a possible implementation, the listening unit 2801 is configured to listen for at least one signal coming from at least one direction, where the at least one signal includes a first signal corresponding to a first direction; and
the communications unit 2802 is configured to indicate a predicted interference time-frequency range to a communications module, where the interference time-frequency range corresponds to a first frequency domain range and a first time domain range, and the predicted interference time-frequency range and a time-frequency range of the first signal meet at least one of the following:
a frequency domain range of the first signal is a subset of the first frequency domain range; or
a time domain range of the first signal is a subset of the first time domain range.

In another possible implementation, the apparatus further includes a processing unit 2803, configured to obtain time domain information and frequency domain information of the at least one signal, where the time domain information includes at least one of a period, an offset, and duration.

In another possible implementation, the first signal includes at least one sub-signal, the interference time-frequency range includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

In another possible implementation, the first direction is a first road direction of an intersection, and the communications module is configured to indicate the predicted interference time-frequency range to a mobile terminal located in a second road direction of the intersection.

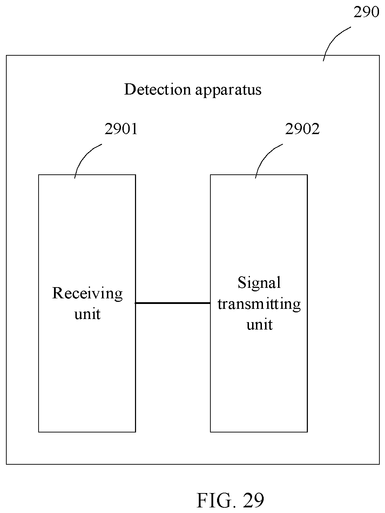

FIG. 29 is a schematic diagram of a structure of a detection apparatus 290 according to an embodiment of this application. The detection apparatus 290 may include a receiving unit 2901 and a signal transmitting unit 2902. The detection apparatus 290 is configured to implement the foregoing detection method, for example, may be configured to implement the detection method shown in FIG. 24.

It should be noted that, for implementation of the units, refer to corresponding descriptions in the method embodiment shown in FIG. 24. The detection apparatus 290 may be the second detection apparatus in the embodiment shown in FIG. 24, or one or more modules of the second detection apparatus.

In a possible implementation, the receiving unit 2901 is configured to receive indication information sent by a first detection apparatus, where the indication information indicates a predicted interference time-frequency range, and the interference time-frequency range corresponds to a first frequency domain range and a first time domain range; and
the signal transmitting unit 2902 is configured to transmit a second detection signal, where a time-frequency range of the first signal and the interference time-frequency range meet at least one of the following:
a frequency domain range of the second detection signal is different from the first frequency domain range; or
a time domain range of the second detection signal is different from the first time domain range.

In another possible implementation, the first detection apparatus is an intersection radar at an intersection, and the interference time-frequency range is specifically used to indicate an interference time-frequency range in a first road direction of the intersection; and
the second detection apparatus is located at a first lane in a second road direction, and the first lane is a lane that allows driving toward the first road direction.

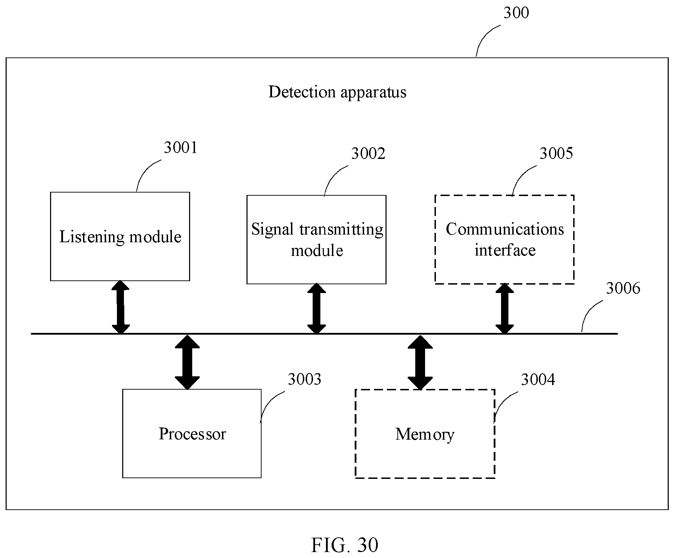

FIG. 30 is a schematic diagram of a structure of a detection apparatus 300 according to an embodiment of this application. The detection apparatus 300 may include a listening module 3001, a signal transmitting module 3002, and at least one processor 3003. Optionally, the communications apparatus may further include at least one memory 3004. Further, the memory 3004 may be coupled to the processor 3003.

Optionally, the detection apparatus may further include a communications interface 3005. Optionally, the detection apparatus 300 may further include a bus 3006. One or more of the listening module 3001, the signal transmitting module 3002, the at least one processor 3003, the at least one memory 3004, and the communications interface 3005 may be connected by using the bus 3005.

The listening module 3001 may be a module used by the first detection apparatus to receive a signal. For example, in a millimeter-wave radar, the listening module includes one or more of an antenna, a frequency mixer, a filter, and an analog-to-digital converter (ADC), and may be configured to receive a signal. For another example, in a laser radar, the listening module may include one or more of a receiving lens, an optical-to-electrical converter, an array receiver, an avalanche photodiode, a reflector, and a diffuser.

The signal transmitting module 3002 is configured to transmit a signal. For example, in a millimeter-wave radar, the signal transmitting module may include at least one of an oscillator and an antenna. In a laser radar, the signal transmitting module may include a laser transmitter, a flash laser array transmitter, or the like, and further, may include a collimation apparatus, a transmitting lens, a light splitter, or the like.

The processor 3003 is a module for performing an arithmetic operation and/or a logical operation, and may be specifically a combination of one or more of processing modules such as a frequency mixer, a low-pass filter (low pass filter, LPF), an analog-to-digital converter (analog-to-digital converter, ADC), a digital signal processor (digital signal processor, DSP), a central processing unit (central processing unit, CPU), a graphics processing unit (graphics processing unit, GPU), a microprocessor (microprocessor unit, MPU), an application-specific integrated circuit (Application-Specific Integrated Circuit, ASIC), a field programmable gate array (Field Programmable Gate Array, FPGA), a complex programmable logic device (Complex programmable logic device, CPLD), a coprocessor (assisting a central processing unit in corresponding processing and application), and a micro control unit (Microcontroller Unit, MCU).

The memory 3004 is configured to provide storage space, and the storage space may store data such as an operating system and a computer program. The memory 3004 may be a combination of one or more of a random access memory (random access memory, RAM), a read-only memory (read-only memory, ROM), an erasable programmable read only memory (erasable programmable read only memory, EPROM), a compact disc read-only memory (compact disc read-only memory, CD-ROM), or the like.

The communications interface 3005 may be configured to provide information input or output for the at least one processor. Alternatively, the communications interface 3005 may be configured to receive data sent from the outside and/or send data to the outside, and may be a wired link interface including an Ethernet cable or the like, or may be a wireless link (Wi-Fi, Bluetooth, universal wireless transmission, an in-vehicle short-distance communications technology, or the like) interface. Optionally, the communications interface 3005 may further include a transmitter (for example, a radio frequency transmitter or an antenna), a receiver, or the like coupled to the interface.

The processor 3003 in the detection apparatus 300 is configured to read the computer program stored in the memory, and is configured to perform the foregoing detection method, for example, the detection method described in FIG. 10 or FIG. 24.

In a possible design, the detection apparatus 300 may be the first detection apparatus in the embodiment shown in FIG. 10, or one or more modules in the first detection apparatus. The processor 3003 is configured to read one or more computer programs stored in the memory, to perform the following operations:
listening, by using the listening module 3001, for at least one signal coming from at least one direction, where the at least one signal includes a first signal corresponding to a first direction; and
transmitting a second signal toward a second direction by using the signal transmitting module 3002, where the second signal is used to indicate a predicted interference time-frequency range, where
time-frequency ranges of the first signal and the second signal meet at least one of the following:
   a frequency domain range of the first signal is a subset of a frequency domain range of the second signal; or
   a time domain range of the first signal is a subset of a time domain range of the second signal.

In another possible implementation, the first direction is a first road direction of an intersection, the second direction is a second road direction of the intersection, a plurality of lanes in the second road direction include a first lane, and the first lane is a lane that allows driving toward the first road direction.

In another possible implementation, a second detection apparatus exists in the second direction, and the processor 3003 is further configured to determine, based on driving intention information of the second detection apparatus, that the second detection apparatus intends to turn toward the first direction.

In another possible implementation, the at least one signal further includes a third signal corresponding to a third direction, and time-frequency ranges of the third signal and the second signal further meet at least one of the following:
a frequency domain range of the third signal is a subset of the frequency domain range of the second signal; or
a time domain range of the third signal is a subset of the time domain range of the second signal.

In another possible implementation, the processor 3003 is further configured to:
listen, by using the listening module 3001, for a fourth signal coming from a fourth direction; and
transmit a fifth signal toward the second direction by using the signal transmitting module 3002, where the fifth signal is used to indicate a predicted interference time-frequency range of the fourth direction, and time-frequency ranges of the fourth signal and the fifth signal meet at least one of the following:
   a frequency domain range of the fourth signal is a subset of a frequency domain range of the fifth signal; or
   a time domain range of the fourth signal is a subset of a time domain range of the fifth signal.

In another possible implementation, the first signal includes at least one sub-signal, the frequency domain range of the second signal includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

In another possible implementation, the second signal is transmitted in a form of a detection frame, the detection frame includes a detection time and an idle time, the detection time of the detection frame is used to transmit a first detection signal for target detection, and the processor 3003 is specifically configured to:
send the second signal in the detection time of the detection frame by using the signal transmitting module 3002, where the second signal belongs to the first detection signal; or
send the first detection signal in the detection time of the detection frame by using the signal transmitting module 3002, and send the second signal in the idle time of the detection frame by using the signal transmitting module; or
send the first detection signal in a detection time of a first detection frame by using the signal transmitting module 3002, and send the second signal in a detection time of a second detection frame by using the signal transmitting module, where the detection frame includes the first detection frame and the second detection frame.

In another possible implementation, the second signal is transmitted in a form of a detection frame, the detection frame includes a detection time and an idle time, the detection time of the detection frame is used to transmit a first detection signal for target detection, and the processor 3003 is specifically configured to listen, by using the listening module 3001 in the idle time of the detection frame, for the at least one signal coming from the at least one direction.

In another possible design, the detection apparatus 300 may be the first detection apparatus in the embodiment shown in FIG. 24, or one or more modules in the first detection apparatus. The processor 3003 is configured to read one or more computer programs stored in the memory, to perform the following operations:
listening, by using the listening module 3001, for at least one signal coming from at least one direction, where the at least one signal includes a first signal corresponding to a first direction; and
indicating a predicted interference time-frequency range to a communications module by using the communications interface 3005, where the interference time-frequency range corresponds to a first frequency domain range and a first time domain range, and the predicted interference time-frequency range and a time-frequency range of the first signal meet at least one of the following:
   a frequency domain range of the first signal is a subset of the first frequency domain range; or
   a time domain range of the first signal is a subset of the first time domain range.

In another possible implementation, the processor 3003 is further configured to obtain time domain information and frequency domain information of the at least one signal, where the time domain information includes at least one of a period, an offset, and duration.

In another possible implementation, the first signal includes at least one sub-signal, the interference time-frequency range includes a frequency domain range corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

In another possible implementation, the first direction is a first road direction of an intersection, and the communications module is configured to indicate the predicted interference time-frequency range to a mobile terminal located in a second road direction of the intersection.

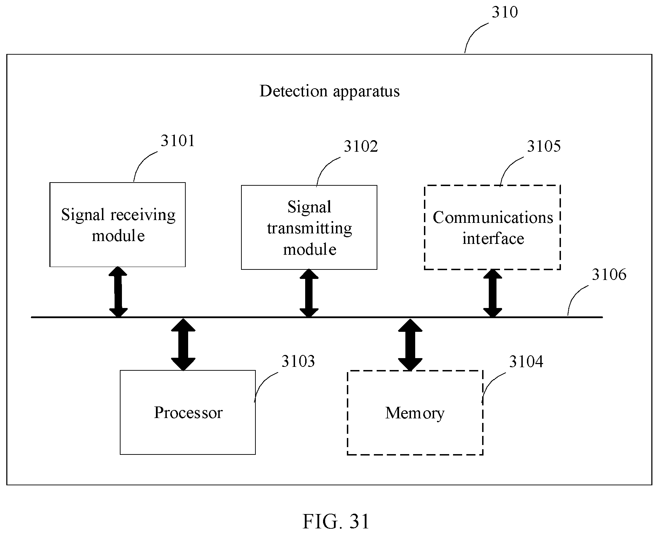

FIG. 31 is a schematic diagram of a structure of a detection apparatus 310 according to an embodiment of this application. The detection apparatus 310 may include a signal receiving module 3101, a signal transmitting module 3102, and at least one processor 3103. Optionally, the communications apparatus may further include at least one memory 3104. Further, the memory 3104 may be coupled to the processor 3103.

Optionally, the detection apparatus may further include a communications interface 3105. Optionally, the detection apparatus 3100 may further include a bus 3106. One or more of the signal receiving module 3101, the signal transmitting module 3102, the at least one processor 3103, the at least one memory 3104, and the communications interface 3105 may be connected by using the bus 3105.

The signal receiving module 3101 may be a module used by the detection apparatus 310 to receive a signal. For example, in a millimeter-wave radar, the listening module includes one or more of an antenna, a frequency mixer, a filter, and an ADC, and may be configured to receive a signal. For another example, in a laser radar, the listening module may include one or more of a receiving lens, an optical-to-electrical converter, an array receiver, an avalanche photodiode, a reflector, and a diffuser.

The signal transmitting module 3102 is configured to transmit a signal. For example, in a millimeter-wave radar, the signal transmitting module may include at least one of an oscillator and an antenna. In a laser radar, the signal transmitting module may include a laser transmitter, a flash laser array transmitter, or the like, and further, may include a collimation apparatus, a transmitting lens, a light splitter, or the like.

The processor 3103 is a module for performing an arithmetic operation and/or a logical operation, and may be specifically a combination of one or more of processing modules such as a frequency mixer, an LPF, an ADC, a DSP, a CPU, a GPU, an MPU, an ASIC, an FPGA, a CPLD, a coprocessor (assisting a central processing unit in corresponding processing and application), and an MCU.

Further, the processor 3103 may be outside the detection apparatus 310. For example, a processor of a vehicle-mounted radar may be alternatively integrated into a vehicle.

The memory 3104 is configured to provide storage space, and the storage space may store data such as an operating system and a computer program. The memory 3104 may be a combination of one or more of a RAM, a ROM, an EPROM, a CD-ROM, or the like.

The communications interface 3105 may be configured to provide information input or output for the at least one processor. Alternatively, the communications interface 3105 may be configured to receive data sent from the outside and/or send data to the outside, and may be a wired link interface including an Ethernet cable or the like, or may be a wireless link (Wi-Fi, Bluetooth, universal wireless transmission, an in-vehicle short-distance communications technology, or the like) interface. Optionally, the communications interface 3105 may further include a transmitter (for example, a radio frequency transmitter or an antenna), a receiver, or the like coupled to the interface.

The processor 3105 in the detection apparatus 310 is configured to read the computer program stored in the memory, and is configured to perform the foregoing detection method, for example, the detection method described in FIG. 10 or FIG. 24.

In a possible design, the detection apparatus 310 may be the second detection apparatus in the embodiment shown in FIG. 10, or one or more modules in the second detection apparatus. The processor 3103 is configured to read one or more computer programs stored in the memory, to perform the following operations:
receiving a second signal by using the signal receiving module 3101, where the second signal is used to indicate a predicted interference time-frequency range; and
transmitting, by using the signal transmitting module 3102, a second detection signal for target detection, where a time-frequency range of the second detection signal and a time-frequency range of the second signal meet at least one of the following:
   a frequency domain range of the second detection signal is different from a frequency domain range of the second signal; or
   a time domain range of the second detection signal is different from a time domain range of the second signal.

In a possible implementation, the second signal comes from an intersection radar at an intersection, and the second signal is used to indicate a predicted interference time-frequency range in a first road direction of the intersection; and
the second detection apparatus is located at a first lane in a second road direction, and the first lane is a lane that allows driving toward the first road direction.

In another possible design, the detection apparatus 310 may be the second detection apparatus in the embodiment shown in FIG. 24, or one or more modules in the second detection apparatus. The processor 3103 is configured to read one or more computer programs stored in the memory, to perform the following operations:
receiving, through the communications interface 3105, indication information sent by a first detection apparatus, where the indication information indicates a predicted interference time-frequency range, and the interference time-frequency range corresponds to a first frequency domain range and a first time domain range; and
transmitting a second detection signal by using the signal transmitting module 3102, where a time-frequency range of the first signal and the interference time-frequency range meet at least one of the following:
   a frequency domain range of the second detection signal is different from the first frequency domain range; or
   a time domain range of the second detection signal is different from the first time domain range.

In a possible implementation, the first detection apparatus is an intersection radar at an intersection, and the interference time-frequency range is specifically used to indicate an interference time-frequency range in a first road direction of the intersection. Further, the second detection apparatus is located at a first lane in a second road direction, and the first lane is a lane that allows driving toward the first road direction.

An embodiment of this application further provides a radar, including a transmit end, a receive end, and a memory. The processor is configured to invoke computer program instructions stored in the memory, so that the radar implements the method on a side of the first detection apparatus in the embodiment shown in FIG. 10 or FIG. 24.

Further, the radar may be a laser radar, a millimeter-wave radar, an ultrasonic radar, an infrared sensor, or the like. Optionally, the radar may be an intersection radar or a vehicle-mounted radar, or may be another radar system, for example, a radar installed on an apparatus such as an unmanned aerial vehicle, a track vehicle, a bicycle, a signal light, a speed measurement apparatus, or a base station.

An embodiment of this application further provides a terminal, including a transmit end, a receive end, and a memory. The processor is configured to invoke computer program instructions stored in the memory, so that the radar implements the method on a side of the second detection apparatus in the embodiment shown in FIG. 10 or FIG. 24.

Further, the terminal may be a detection apparatus, or further, may be a terminal that includes a detection apparatus, for example, may be a detection apparatus such as a laser radar, a millimeter-wave radar, an ultrasonic radar, or an infrared sensor, or may be an intelligent terminal or a transportation vehicle such as a vehicle, an unmanned aerial vehicle, or a robot that includes a detection apparatus such as a laser radar, a millimeter-wave radar, an ultrasonic radar, or an infrared sensor.

An embodiment of this application further provides a computer-readable storage medium. The computer-readable storage medium stores a computer program. When the computer program is run on one or more processors, the method in the embodiment shown in FIG. 10 or FIG. 24 is implemented.

An embodiment of this application further provides a computer program product. When the computer program product is run on one or more processors, the method in the embodiment shown in FIG. 10 or FIG. 24 is implemented.

An embodiment of this application further provides a chip system. The chip system includes a communications interface and at least one processor. The communications interface is configured to provide information input/output for the at least one processor. The processor is configured to invoke computer instructions from the communications interface, to implement the method in the embodiment shown in FIG. 10 or FIG. 24. Further, the at least one processor may be a combination of one or more of processing modules such as a frequency mixer, an LPF, an ADC, a DSP, a CPU, a GPU, an MPU, an ASIC, an FPGA, a CPLD, a coprocessor (assisting a central processing unit in corresponding processing and application), and an MCU.

An embodiment of this application further provides a detection system. The detection system includes a radar and a terminal. The radar includes the first detection apparatus described in the embodiment shown in FIG. 26 or FIG. 28, and the terminal includes the second detection apparatus described in the embodiment shown in FIG. 27 or FIG. 29.

An embodiment of this application further provides a detection system. The detection system includes a radar and a terminal. The radar includes the first detection apparatus described in the embodiment shown in FIG. 30, and the terminal includes the second detection apparatus described in the embodiment shown in FIG. 31.

When the computer instructions are loaded and executed on a computer, the procedures or functions described in the embodiments of this application can be all or partially implemented. The computer may be a general-purpose computer, a dedicated computer, a computer network, or another programmable apparatus. The computer instructions may be stored in a computer-readable storage medium, or may be transmitted through a computer-readable storage medium. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

Sequence adjustment, combination, and deletion may be performed on the steps in the method embodiments of this application based on an actual requirement.

Combination, division, and deletion may be performed on the modules in the apparatus embodiments of this application based on an actual requirement.

## Claims

1. A detection method, wherein the method comprises:
listening (S1001, S2401) for at least one signal coming from at least one direction, wherein the at least one signal comprises a first signal corresponding to a first direction; and
transmitting (S1002) a second signal toward a second direction, wherein the second signal is used to indicate (S2402) a predicted interference time-frequency range,
wherein time-frequency ranges of the first signal and the second signal meet at least one of the following:
a frequency domain range (f₀, f₁) of the first signal is a subset of a frequency domain range (f₂, f₃) (f₄, f₅) (f₆, f₇) of the second signal; or
a time domain range of the first signal is a subset of a time domain range of the second signal; and
**characterized in that**
the first signal comprises at least one sub-signal, the frequency domain range (f2, f3) (f4, f5) (f6, f7) of the second signal comprises a frequency domain range (f0, f1) corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold in the first signal; or
the N sub-signals are sub-signals whose signal strength exceeds a first threshold and ranks in the top N in the first signal.

2. The method according to claim 1, wherein the method further comprises:
obtaining time domain information and frequency domain information of the at least one signal, wherein the time domain information comprises at least one of a period (t3-t0) (t10-t7), an offset (t1-t0) (t8-t0), and duration (t2-t1) (t9-t8).

3. The method according to claim 1, wherein the first direction is a first road direction of an intersection, the second direction is a second road direction of the intersection, a plurality of lanes in the second road direction comprise a first lane, and the first lane is a lane that allows driving toward the first road direction.

4. The method according to any one of claims 1 to 3, wherein the at least one signal further comprises a third signal corresponding to a third direction, and time-frequency ranges of the third signal and the second signal further meet at least one of the following:
a frequency domain range of the third signal is a subset of the frequency domain range (f₂, f₃) (f₄, f₅) (f₆, f₇) of the second signal; or
a time domain range of the third signal is a subset of the time domain range of the second signal.

5. The method according to any one of claims 1 to 3, wherein the method further comprises:
listening for a fourth signal coming from a fourth direction; and
transmitting a fifth signal toward the second direction, wherein the fifth signal is used to indicate (S2402) a predicted interference time-frequency range of the fourth direction, and time-frequency ranges of the fifth signal and the fourth signal meet at least one of the following:
a frequency domain range of the fourth signal is a subset of a frequency domain range of the fifth signal; or
a time domain range of the fourth signal is a subset of a time domain range of the fifth signal.

6. The method according to any one of claims 1 to 5, wherein the second signal is transmitted in a form of a detection frame, the detection frame comprises a detection time and an idle time, the detection time of the detection frame is used to transmit a first detection signal for target detection, and the transmitting (S1002) a second signal toward a second direction comprises:
sending the second signal in the detection time of the detection frame, wherein the second signal belongs to the first detection signal; or
sending the first detection signal in the detection time of the detection frame, and sending the second signal in the idle time of the detection frame; or
sending the first detection signal in a detection time of a first detection frame, and sending the second signal in a detection time of a second detection frame, wherein the detection frame comprises the first detection frame and the second detection frame.

7. The method according to any one of claims 1 to 5, wherein the second signal is transmitted (S1002) in a form of a detection frame, the detection frame comprises a detection time and an idle time, the detection time of the detection frame is used to transmit a first detection signal for target detection, and the listening (S1001, S2401) for at least one signal coming from at least one direction comprises:
listening (S1001, S2401), in the idle time of the detection frame, for the at least one signal coming from the at least one direction.

8. A detection apparatus (901, 260, 280, 300, 3100) comprising:
a listening unit (2601, 2801, 3001) configured to listen (S1001, S2401) for at least one signal coming from at least one direction, wherein the at least one signal comprises a first signal corresponding to a first direction; and
a signal transmitting unit (2602, 3002, 3102), configured to transmit (S1002) a second signal toward a second direction, wherein the second signal is used to indicate (S2402) a predicted interference time-frequency range,
wherein time-frequency ranges of the first signal and the second signal meet at least one of the following:
a frequency domain range (f₀, f₁) of the first signal is a subset of a frequency domain range (f₂, f₃) (f₄, f₅) (f₆, f₇) of the second signal; or
a time domain range of the first signal is a subset of a time domain range of the second signal; and
**characterized in that**
the first signal comprises at least one sub-signal, the frequency domain range (f2, f3) (f4, f5) (f6, f7) of the second signal comprises a frequency domain range (f0, f1) corresponding to N sub-signals in the first signal, and N is greater than or equal to 1; and
the N sub-signals are sub-signals whose signal strength ranks in the top N in the first signal; or
the N sub-signals are sub-signals whose signal strength exceeds a first threshold signal in the first signal; or
the N sub-signals are sub-signals whose signal strength exceeds a first threshold and ranks in the top N in the first signal.

9. The apparatus (901, 260, 280, 300, 3100) according to claim 8, wherein the apparatus (901, 260, 280, 300, 3100) further comprises:
a processing unit (2603, 2803, 3003, 3103) configured to obtain time domain information and frequency domain information of the at least one signal, wherein the time domain information comprises at least one of a period (t0 to t2) (t3-t0) (t10-t7), an offset (t1-t0) (t8-t0), and duration (t2-t1) (t9-t8).

10. The apparatus (901, 260, 280, 300, 3100) according to claim 8 or 9, wherein the first direction is a first road direction of an intersection, the second direction is a second road direction of the intersection, a plurality of lanes in the second road direction comprise a first lane, and the first lane is a lane that allows driving toward the first road direction.

11. The apparatus (901, 260, 280, 300, 3100) according to any one of claims 8 to 10, wherein the at least one signal further comprises a third signal corresponding to a third direction, and time-frequency ranges of the third signal and the second signal further meet at least one of the following:
a frequency domain range of the third signal is a subset of the frequency domain range (f₂, f₃) (f₄, f₅) (f₆, f₇) of the second signal; or
a time domain range of the third signal is a subset of the time domain range of the second signal.

12. The apparatus (901, 260, 280, 300, 3100) according to any one of claims 8 to 11, wherein the listening unit (2601, 2801, 3001) is further configured to listen for a fourth signal coming from a fourth direction;
the signal transmitting unit (2602, 3002, 3102) is further configured to transmit a fifth signal toward the second direction, wherein the fifth signal is used to indicate (S2402) a predicted interference time-frequency range of the fourth direction, and time-frequency ranges of the fourth signal and the fifth signal meet at least one of the following:
a frequency domain range of the fourth signal is a subset of a frequency domain range of the fifth signal; or
a time domain range of the fourth signal is a subset of a time domain range of the fifth signal.

13. The apparatus (901, 260, 280, 300, 3100) according to any one of claims 8 to 12, wherein the second signal is transmitted (S1002) in a form of a detection frame, the detection frame comprises a detection time and an idle time, the detection time of the detection frame is used to transmit a first detection signal for target detection, and the signal transmitting unit (2602, 3002, 3102) is specifically configured to:
send the second signal in the detection time of the detection frame, wherein the second signal belongs to the first detection signal; or
send the first detection signal in the detection time of the detection frame, and send the second signal in the idle time of the detection frame; or
send the first detection signal in a detection time of a first detection frame, and send the second signal in a detection time of a second detection frame, wherein the detection frame comprises the first detection frame and the second detection frame.

## Patentansprüche

1. Detektionsverfahren, wobei das Verfahren Folgendes umfasst:
Abhören (S1001, S2401) mindestens eines Signals, das aus mindestens einer Richtung kommt, wobei das mindestens eine Signal ein erstes Signal umfasst, das einer ersten Richtung entspricht; und
Übertragen (S1002) eines zweiten Signals in eine zweite Richtung, wobei das zweite Signal dazu verwendet wird, einen vorhergesagten Interferenzzeitfrequenzbereich anzugeben (S2402),
wobei Zeitfrequenzbereiche des ersten Signals und des zweiten Signals mindestens eines von Folgendem erfüllen:
ein Frequenzdomänenbereich (f₀, f₁) des ersten Signals ist ein Teilsatz eines Frequenzdomänenbereichs (f₂, f₃) (f₄, f₅) (f₆, f₇) des zweiten Signals; oder
ein Zeitdomänenbereich des ersten Signals ist ein Teilsatz eines Zeitdomänenbereichs des zweiten Signals; und
**dadurch gekennzeichnet, dass**
das erste Signal mindestens ein Teilsignal umfasst, der Frequenzdomänenbereich (f2, f3) (f4, f5) (f6, f7) des zweiten Signals einen Frequenzdomänenbereich (f0, f1) umfasst, der N Teilsignalen in dem ersten Signal entspricht, und N größer als oder gleich 1 ist; und
die N Teilsignale Teilsignale sind, deren Signalstärke zu den obersten N in dem ersten Signal gehört; oder
die N Teilsignale Teilsignale sind, deren Signalstärke einen ersten Schwellenwert in dem ersten Signal überschreitet; oder
die N Teilsignale Teilsignale sind, deren Signalstärke einen ersten Schwellenwert überschreitet und zu den obersten N in dem ersten Signal gehört.

2. Verfahren nach Anspruch 1, wobei das Verfahren ferner Folgendes umfasst:
Erlangen von Zeitdomäneninformationen und Frequenzdomäneninformationen des mindestens einen Signals, wobei die Zeitdomäneninformationen mindestens eines von einem Zeitraum (t3-t0) (t10-t7), einem Versatz (t1-t0) (t8-t0) und einer Dauer (t2-t1) (t9-t8) umfassen.

3. Verfahren nach Anspruch 1, wobei die erste Richtung eine erste Straßenrichtung einer Kreuzung ist, die zweite Richtung eine zweite Straßenrichtung der Kreuzung ist, eine Vielzahl von Fahrspuren in der zweiten Straßenrichtung eine erste Fahrspur umfasst und die erste Fahrspur eine Fahrspur ist, die Fahren in Richtung der ersten Straßenrichtung erlaubt.

4. Verfahren nach einem der Ansprüche 1 bis 3, wobei das mindestens eine Signal ferner ein drittes Signal umfasst, das einer dritten Richtung entspricht, und Zeitfrequenzbereiche des dritten Signals und des zweiten Signals ferner mindestens eines von Folgendem erfüllen:
ein Frequenzdomänenbereich des dritten Signals ist ein Teilsatz des Frequenzdomänenbereichs (f₂, f₃) (f₄, f₅) (f₆, f₇) des zweiten Signals; oder
ein Zeitdomänenbereich des dritten Signals ist ein Teilsatz des Zeitdomänenbereichs des zweiten Signals.

5. Verfahren nach einem der Ansprüche 1 bis 3, wobei das Verfahren ferner Folgendes umfasst:
Abhören eines vierten Signals, das aus einer vierten Richtung kommt; und
Übertragen eines fünften Signals in die zweite Richtung, wobei das fünfte Signal dazu verwendet wird, einen vorhergesagten Interferenzzeitfrequenzbereich der vierten Richtung anzugeben (S2402), und Zeitfrequenzbereiche des fünften Signals und des vierten Signals mindestens eines von Folgendem erfüllen:
ein Frequenzdomänenbereich des vierten Signals ist ein Teilsatz eines Frequenzdomänenbereichs des fünften Signals; oder
ein Zeitdomänenbereich des vierten Signals ist ein Teilsatz eines Zeitdomänenbereichs des fünften Signals.

6. Verfahren nach einem der Ansprüche 1 bis 5, wobei das zweite Signal in einer Form eines Detektionsrahmens übertragen wird, der Detektionsrahmen eine Detektionszeit und eine Leerlaufzeit umfasst, die Detektionszeit des Detektionsrahmens dazu verwendet wird, ein erstes Detektionssignal zur Zieldetektion zu übertragen, und das Übertragen (S1002) eines zweiten Signals in eine zweite Richtung Folgendes umfasst:
Senden des zweiten Signals in der Detektionszeit des Detektionsrahmens, wobei das zweite Signal zu dem ersten Detektionssignal gehört; oder
Senden des ersten Detektionssignals in der Detektionszeit des Detektionsrahmens und Senden des zweiten Signals in der Leerlaufzeit des Detektionsrahmens; oder
Senden des ersten Detektionssignals in einer Detektionszeit eines ersten Detektionsrahmens und Senden des zweiten Signals in einer Detektionszeit eines zweiten Detektionsrahmens, wobei der Detektionsrahmen den ersten Detektionsrahmen und den zweiten Detektionsrahmen umfasst.

7. Verfahren nach einem der Ansprüche 1 bis 5, wobei das zweite Signal in einer Form eines Detektionsrahmens übertragen (S1002) wird, der Detektionsrahmen eine Detektionszeit und eine Leerlaufzeit umfasst, die Detektionszeit des Detektionsrahmens dazu verwendet wird, ein erstes Detektionssignal zur Zieldetektion zu übertragen, und das Abhören (S1001, S2401) mindestens eines Signals, das aus mindestens einer Richtung kommt, Folgendes umfasst:
Abhören (S1001, S2401), in der Leerlaufzeit des Detektionsrahmens, des mindestens einen Signals, das aus der mindestens einen Richtung kommt.

8. Detektionseinrichtung (901, 260, 280, 300, 3100), umfassend:
eine Abhöreinheit (2601, 2801, 3001), die dazu konfiguriert ist, mindestens ein Signal abzuhören (S1001, S2401), das aus mindestens einer Richtung kommt, wobei das mindestens eine Signal ein erstes Signal umfasst, das einer ersten Richtung entspricht; und
eine Signalübertragungseinheit (2602, 3002, 3102), die dazu konfiguriert ist, ein zweites Signal in eine zweite Richtung zu übertragen (S1002), wobei das zweite Signal dazu verwendet wird, einen vorhergesagten Interferenzzeitfrequenzbereich anzugeben (S2402),
wobei Zeitfrequenzbereiche des ersten Signals und des zweiten Signals mindestens eines von Folgendem erfüllen:
ein Frequenzdomänenbereich (f₀, f₁) des ersten Signals ist ein Teilsatz eines Frequenzdomänenbereichs (f₂, f₃) (f₄, f₅) (f₆, f₇) des zweiten Signals; oder
ein Zeitdomänenbereich des ersten Signals ist ein Teilsatz eines Zeitdomänenbereichs des zweiten Signals; und
**dadurch gekennzeichnet, dass**
das erste Signal mindestens ein Teilsignal umfasst, der Frequenzdomänenbereich (f2, f3) (f4, f5) (f6, f7) des zweiten Signals einen Frequenzdomänenbereich (f0, f1) umfasst, der N Teilsignalen in dem ersten Signal entspricht, und N größer als oder gleich 1 ist; und
die N Teilsignale Teilsignale sind, deren Signalstärke zu den obersten N in dem ersten Signal gehört; oder
die N Teilsignale Teilsignale sind, deren Signalstärke ein erstes Schwellenwertsignal in dem ersten Signal überschreitet;
oder
die N Teilsignale Teilsignale sind, deren Signalstärke einen ersten Schwellenwert überschreitet und zu den obersten N in dem ersten Signal gehört.

9. Einrichtung (901, 260, 280, 300, 3100) nach Anspruch 8, wobei die Einrichtung (901, 260, 280, 300, 3100) ferner Folgendes umfasst:
eine Verarbeitungseinheit (2603, 2803, 3003, 3103), die dazu konfiguriert ist, Zeitdomäneninformationen und Frequenzdomäneninformationen des mindestens einen Signals zu erlangen, wobei die Zeitdomäneninformationen mindestens eines von einem Zeitraum (t0 bis t2) (t3-t0) (t10-t7), einem Versatz (t1-t0) (t8-t0) und einer Dauer (t2-t1) (t9-t8) umfassen.

10. Einrichtung (901, 260, 280, 300, 3100) nach Anspruch 8 oder 9, wobei die erste Richtung eine erste Straßenrichtung einer Kreuzung ist, die zweite Richtung eine zweite Straßenrichtung der Kreuzung ist, eine Vielzahl von Fahrspuren in der zweiten Straßenrichtung eine erste Fahrspur umfasst und die erste Fahrspur eine Fahrspur ist, die Fahren in Richtung der ersten Straßenrichtung erlaubt.

11. Einrichtung (901, 260, 280, 300, 3100) nach einem der Ansprüche 8 bis 10, wobei das mindestens eine Signal ferner ein drittes Signal umfasst, das einer dritten Richtung entspricht, und Zeitfrequenzbereiche des dritten Signals und des zweiten Signals ferner mindestens eines von Folgendem erfüllen:
ein Frequenzdomänenbereich des dritten Signals ist ein Teilsatz des Frequenzdomänenbereichs (f₂, f₃) (f₄, f₅) (f₆, f₇) des zweiten Signals; oder
ein Zeitdomänenbereich des dritten Signals ist ein Teilsatz des Zeitdomänenbereichs des zweiten Signals.

12. Einrichtung (901, 260, 280, 300, 3100) nach einem der Ansprüche 8 bis 11, wobei die Abhöreinheit (2601, 2801, 3100) ferner dazu konfiguriert ist, ein viertes Signal abzuhören, das aus einer vierten Richtung kommt;
die Signalübertragungseinheit (2602, 3002, 3102) ferner dazu konfiguriert ist, ein fünftes Signal in die zweite Richtung zu übertragen, wobei das fünfte Signal dazu verwendet wird, einen vorhergesagten Interferenzzeitfrequenzbereich der vierten Richtung anzugeben (S2402), und Zeitfrequenzbereiche des vierten Signals und des fünften Signals mindestens eines von Folgendem erfüllen:
ein Frequenzdomänenbereich des vierten Signals ist ein Teilsatz eines Frequenzdomänenbereichs des fünften Signals; oder
ein Zeitdomänenbereich des vierten Signals ist ein Teilsatz eines Zeitdomänenbereichs des fünften Signals.

13. Einrichtung (901, 260, 280, 300, 3100) nach einem der Ansprüche 8 bis 12, wobei das zweite Signal in einer Form eines Detektionsrahmens übertragen (S1002) wird, der Detektionsrahmen eine Detektionszeit und eine Leerlaufzeit umfasst, die Detektionszeit des Detektionsrahmens dazu verwendet wird, ein erstes Detektionssignal zur Zieldetektion zu übertragen, und die Signalübertragungseinheit (2602, 3002, 3102) speziell zu Folgendem konfiguriert ist:
Senden des zweiten Signals in der Detektionszeit des Detektionsrahmens, wobei das zweite Signal zu dem ersten Detektionssignal gehört; oder
Senden des ersten Detektionssignals in der Detektionszeit des Detektionsrahmens und Senden des zweiten Signals in der Leerlaufzeit des Detektionsrahmens; oder
Senden des ersten Detektionssignals in einer Detektionszeit eines ersten Detektionsrahmens und Senden des zweiten Signals in einer Detektionszeit eines zweiten Detektionsrahmens, wobei der Detektionsrahmen den ersten Detektionsrahmen und den zweiten Detektionsrahmen umfasst.

## Revendications

1. Procédé de détection, dans lequel le procédé comprend :
l'écoute (S1001, S2401) d'au moins un signal provenant d'au moins une direction, dans lequel l'au moins un signal comprend un premier signal correspondant à une première direction ; et
la transmission (S1002) d'un deuxième signal vers une deuxième direction, dans lequel le deuxième signal est utilisé pour indiquer (S2402) une plage temps-fréquence d'interférence prédite,
dans lequel les plages temps-fréquence du premier signal et du deuxième signal satisfont à au moins l'une des conditions suivantes :
une plage de domaine de fréquence (f₀, f₁) du premier signal est un sous-ensemble d'une plage de domaine de fréquence (f₂, f₃) (f₄, f₅) (f₆, f₇) du deuxième signal ; ou
une plage de domaine temporel du premier signal est un sous-ensemble d'une plage de domaine temporel du deuxième signal ;
et
**caractérisé en ce que**
le premier signal comprend au moins un sous-signal, la plage de domaine de fréquence (f2, f3) (f4, f5) (f6, f7) du deuxième signal comprend une plage de domaine de fréquence (f0, f1) correspondant à N sous-signaux dans le premier signal, et N est supérieur ou égal à 1 ; et
les N sous-signaux sont des sous-signaux dont la force du signal se classe parmi les N premiers du premier signal ; ou
les N sous-signaux sont des sous-signaux dont la force du signal dépasse un premier seuil dans le premier signal ; ou
les N sous-signaux sont des sous-signaux dont la force du signal dépasse un premier seuil et se classe parmi les N premiers du premier signal.

2. Procédé selon la revendication 1, dans lequel le procédé comprend également :
l'obtention d'informations de domaine temporel et d'informations de domaine de fréquence de l'au moins un signal, dans lequel les informations de domaine temporel comprennent au moins l'un d'une période (t3-t0) (t10-t7), d'un décalage (t1-t0) (t8-t0), et d'une durée (t2-t1) (t9-t8).

3. Procédé selon la revendication 1, dans lequel la première direction est une première direction de route d'une intersection, la deuxième direction est une seconde direction de route de l'intersection, une pluralité de voies dans la seconde direction de route comprennent une première voie, et la première voie est une voie qui permet de conduire vers la première direction de route.

4. Procédé selon l'une quelconque des revendications 1 à 3, dans lequel l'au moins un signal comprend également un troisième signal correspondant à une troisième direction, et les plages temps-fréquence du troisième signal et du deuxième signal satisfont également à au moins l'une des conditions suivantes :
une plage de domaine de fréquence du troisième signal est un sous-ensemble de la plage de domaine de fréquence (f₂, f₃) (f₄, f₅) (f₆, f₇) du deuxième signal ; ou
une plage de domaine temporel du troisième signal est un sous-ensemble de la plage de domaine temporel du deuxième signal.

5. Procédé selon l'une quelconque des revendications 1 à 3, dans lequel le procédé comprend également :
l'écoute d'un quatrième signal provenant d'une quatrième direction ; et
la transmission d'un cinquième signal vers la deuxième direction, dans lequel le cinquième signal est utilisé pour indiquer (S2402) une plage temps-fréquence d'interférence prédite de la quatrième direction, et les plages temps-fréquence du cinquième signal et du quatrième signal satisfont à au moins l'une des conditions suivantes :
une plage de domaine de fréquence du quatrième signal est un sous-ensemble d'une plage de domaine de fréquence du cinquième signal ; ou
une plage de domaine temporel du quatrième signal est un sous-ensemble d'une plage de domaine temporel du cinquième signal.

6. Procédé selon l'une quelconque des revendications 1 à 5, dans lequel le deuxième signal est transmis sous une forme d'une trame de détection, la trame de détection comprend un temps de détection et un temps d'inactivité, le temps de détection de la trame de détection est utilisé pour transmettre un premier signal de détection pour une détection cible, et la transmission (S1002) d'un deuxième signal vers une deuxième direction comprend :
l'envoi du deuxième signal dans le temps de détection de la trame de détection, dans lequel le deuxième signal appartient au premier signal de détection ; ou
l'envoi du premier signal de détection dans le temps de détection de la trame de détection, et l'envoi du deuxième signal dans le temps d'inactivité de la trame de détection ; ou
l'envoi du premier signal de détection dans un temps de détection d'une première trame de détection, et l'envoi du deuxième signal dans un temps de détection d'une seconde trame de détection, dans lequel la trame de détection comprend la première trame de détection et la seconde trame de détection.

7. Procédé selon l'une quelconque des revendications 1 à 5, dans lequel le deuxième signal est transmis (S1002) sous une forme d'une trame de détection, la trame de détection comprend un temps de détection et un temps d'inactivité, le temps de détection de la trame de détection est utilisé pour transmettre un premier signal de détection pour une détection cible, et l'écoute (S1001, S2401) d'au moins un signal provenant d'au moins une direction comprend :
l'écoute (S1001, S2401), dans le temps d'inactivité de la trame de détection, de l'au moins un signal provenant de l'au moins une direction.

8. Appareil de détection (901, 260, 280, 300, 3100) comprenant :
une unité d'écoute (2601, 2801, 3001) configurée pour écouter (S1001, S2401) au moins un signal provenant d'au moins une direction, dans lequel l'au moins un signal comprend un premier signal correspondant à une première direction ; et
une unité de transmission de signal (2602, 3002, 3102) configurée pour transmettre (S1002) un deuxième signal vers une deuxième direction, dans lequel le deuxième signal est utilisé pour indiquer (S2402) une plage temps-fréquence d'interférence prédite,
dans lequel les plages temps-fréquence du premier signal et du deuxième signal satisfont à au moins l'une des conditions suivantes :
une plage de domaine de fréquence (f₀, f₁) du premier signal est un sous-ensemble d'une plage de domaine de fréquence (f₂, f₃) (f₄, f₅) (f₆, f₇) du deuxième signal ; ou
une plage de domaine temporel du premier signal est un sous-ensemble d'une plage de domaine temporel du deuxième signal ;
et
**caractérisé en ce que**
le premier signal comprend au moins un sous-signal, la plage de domaine de fréquence (f2, f3) (f4, f5) (f6, f7) du deuxième signal comprend une plage de domaine de fréquence (f0, f1) correspondant à N sous-signaux dans le premier signal, et N est supérieur ou égal à 1 ; et
les N sous-signaux sont des sous-signaux dont la force du signal se classe parmi les N premiers du premier signal ; ou
les N sous-signaux sont des sous-signaux dont la force du signal dépasse un premier signal seuil dans le premier signal ; ou
les N sous-signaux sont des sous-signaux dont la force du signal dépasse un premier seuil et se classe parmi les N premiers du premier signal.

9. Appareil (901, 260, 280, 300, 3100) selon la revendication 8, dans lequel l'appareil (901, 260, 280, 300, 3100) comprend également :
une unité de traitement (2603, 2803, 3003, 3103) configurée pour obtenir des informations de domaine temporel et des informations de domaine de fréquence de l'au moins un signal, dans lequel les informations de domaine temporel comprennent au moins l'un d'une période (t0 à t2) (t3-t0) (t10-t7), d'un décalage (t1-t0) (t8-t0), et d'une durée (t2-t1) (t9-t8).

10. Appareil (901, 260, 280, 300, 3100) selon la revendication 8 ou 9, dans lequel la première direction est une première direction de route d'une intersection, la deuxième direction est une seconde direction de route de l'intersection, une pluralité de voies dans la seconde direction de route comprennent une première voie, et la première voie est une voie qui permet de conduire vers la première direction de route.

11. Appareil (901, 260, 280, 300, 3100) selon l'une quelconque des revendications 8 à 10, dans lequel l'au moins un signal comprend également un troisième signal correspondant à une troisième direction, et les plages temps-fréquence du troisième signal et du deuxième signal satisfont également à au moins l'une des conditions suivantes :
une plage de domaine de fréquence du troisième signal est un sous-ensemble de la plage de domaine de fréquence (f₂, f₃) (f₄, f₅) (f₆, f₇) du deuxième signal ; ou
une plage de domaine temporel du troisième signal est un sous-ensemble de la plage de domaine temporel du deuxième signal.

12. Appareil (901, 260, 280, 300, 3100) selon l'une quelconque des revendications 8 à 11, dans lequel l'unité d'écoute (2601, 2801, 3100) est également configurée pour écouter un quatrième signal provenant d'une quatrième direction ;
l'unité de transmission de signal (2602, 3002, 3102) est également configurée pour transmettre un cinquième signal vers la deuxième direction, dans lequel le cinquième signal est utilisé pour indiquer (S2402) une plage temps-fréquence d'interférence prédite de la quatrième direction, et les plages temps-fréquence du quatrième signal et du cinquième signal satisfont à au moins l'une des conditions suivantes :
une plage de domaine de fréquence du quatrième signal est un sous-ensemble d'une plage de domaine de fréquence du cinquième signal ; ou
une plage de domaine temporel du quatrième signal est un sous-ensemble d'une plage de domaine temporel du cinquième signal.

13. Appareil (901, 260, 280, 300, 3100) selon l'une quelconque des revendications 8 à 12, dans lequel le deuxième signal est transmis (S1002) sous une forme d'une trame de détection, la trame de détection comprend un temps de détection et un temps d'inactivité, le temps de détection de la trame de détection est utilisé pour transmettre un premier signal de détection pour une détection cible, et l'unité de transmission de signal (2602, 3002, 3102) est spécifiquement configurée pour :
envoyer le deuxième signal dans le temps de détection de la trame de détection, dans lequel le deuxième signal appartient au premier signal de détection ; ou
envoyer le premier signal de détection dans le temps de détection de la trame de détection, et envoyer le deuxième signal dans le temps d'inactivité de la trame de détection ; ou
envoyer le premier signal de détection dans un temps de détection d'une première trame de détection, et envoyer le deuxième signal dans un temps de détection d'une seconde trame de détection, dans lequel la trame de détection comprend la première trame de détection et la seconde trame de détection.
